(19) Europäisches Patentamt / European Patent Office / Office européen des brevets

(11) **EP 4 345 553 A1**

(12) **EUROPEAN PATENT APPLICATION**

(43) Date of publication:
**03.04.2024 Bulletin 2024/14**

(21) Application number: **23178866.2**

(22) Date of filing: **13.06.2023**

(51) International Patent Classification (IPC):
**G05B 19/409** (2006.01)   **B65H 67/02** (2006.01)

(52) Cooperative Patent Classification (CPC):
**G05B 19/409; B65H 67/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.07.2022 JP 2022114911**

(71) Applicant: **TMT Machinery, Inc.**
**Osaka-shi, Osaka 541-0041 (JP)**

(72) Inventor: **NAGAI, Norihiro**
**Kyoto-shi, Kyoto, 612-8686 (JP)**

(74) Representative: **Hoffmann Eitle**
**Patent- und Rechtsanwälte PartmbB**
**Arabellastraße 30**
**81925 München (DE)**

(54) **YARN PROCESSING FACILITY**

(57)     Decrease in production efficiency of the yarn Y is suppressed by avoiding interruption of supply of the yarn Y. The information management unit 110 performs: an individual remaining amount information acquisition process of acquiring, for each of the spindles 9, individual remaining amount information that is information related to the individual remaining amount that is the remaining amount of the yarn Y in the yarn supply package Ps attached to the yarn supply package retaining portion 20; and an output process of outputting, to the machine output unit 5b, the remaining amount list information in which sets of individual remaining amount information acquired for the respective spindles 9 in the individual remaining amount information acquisition process are listed. If the node information indicating the presence of a node K is acquired in the individual remaining amount information acquisition process, the information management unit 110 acquires, as the individual remaining amount information, the total of the remaining amount of the yarn Y in the unwinding-in-progress package PsA and the remaining amount of the yarn Y in the reserve package PsB. If the node information indicating the presence of a node K is not acquired in the individual remaining amount information acquisition process, the information management unit 110 acquires the remaining amount of the yarn Y in the unwinding-in-progress package PsA as the individual remaining amount information.

FIG.5

**Description**

BACKGROUND OF THE INVENTION

The present invention relates to a yarn processing facility.

Patent Literature 1 (Published Japanese Translation of a PCT application No. 2003-526584) discloses a processing machine (yarn processing facility) including a large number of processing stations (processing spindles) each of which is configured to process one yarn. Such a processing machine is configured to form a winding assembly (wound package) in such a way that a yarn is unwound from a yarn supply package (a supplying bobbin in Patent Literature 1) formed by winding the yarn onto a yarn supplying bobbin and processed, and the processed yarn is wound onto a winding bobbin.

Each processing station is arranged to be able to support two yarn supply packages for one winding bobbin. When a terminal portion of a yarn in one of the two yarn supply packages is connected to (joined with) a start portion of a yarn in the other of the two yarn supply packages, the yarn can be supplied in an uninterrupted manner as the yarn is supplied from the other package after the one package becomes empty. To be more specific, immediately after the supply of the yarn from the one yarn supply package finishes, the knot (node) of the two yarns is pulled, with the result that unwinding of the yarn from the other yarn supply package starts. Because of this, the yarn is uninterruptedly supplied.

SUMMARY OF THE INVENTION

In order to realize the uninterrupted supply of the yarn, it is necessary to prepare a new yarn supply package after one of the two yarn supply packages becomes empty and while the yarn is being unwound from the other of the yarn supply packages. To be more specific, the empty yarn supplying bobbin is detached and a new yarn supply package is attached. A terminal portion of the yarn in the yarn supply package from which the unwinding is being performed is connected to a start portion of the yarn in the new yarn supply package.

It is, however, difficult to grasp the timing to prepare a new package for each of the large number of processing stations. When the preparation of a new package cannot be done in time and the yarn is no longer supplied, operations such as a yarn threading operation to thread a yarn to each apparatus for processing the yarn must be done, with the result that the production efficiency of the yarn is decreased.

An object of the present invention is to provide a yarn processing facility in which decrease in production efficiency of a yarn is suppressed by avoiding interruption of supply of the yarn.

According to a first aspect of the invention, a yarn processing facility comprises: a yarn processor which includes processing spindles each of which is able to form a wound package by processing a yarn unwound from a yarn supply package and winding the yarn onto a winding bobbin; and an information management unit which is configured to be able to manage information regarding the yarn processor. The yarn processor includes, for each of the processing spindles, a yarn supply package retaining portion to which yarn supply packages including a unwinding-in-progress package from which the yarn is being unwound and a reserve package different from the unwinding-in-progress package are detachably attached, the yarn supply package retaining portion being capable of uninterruptedly supplying the yarn when a terminal portion of the yarn in the unwinding-in-progress package is joined with a start portion of the yarn in the reserve package, the information management unit includes: an output unit which is configured to be able to output information regarding the yarn processor; and a node information acquisition unit which is able to acquire node information that is information regarding presence/absence of a node of the terminal portion of the yarn in the unwinding-in-progress package and the start portion of the yarn of the reserve package, the information management unit executes: an individual remaining amount information acquisition process of acquiring, for each of the processing spindles, a set of individual remaining amount information which is information regarding an individual remaining amount that is a remaining amount of the yarn in the yarn supply package attached to the yarn supply package retaining portion; and an output process of outputting, to the output unit, remaining amount list information in which sets of the individual remaining amount information of the respective processing spindles acquired in the individual remaining amount information acquisition process, and when the individual remaining amount information acquisition process is performed, if the node information acquisition unit acquires the node information indicating presence of the node, the information management unit acquires sum total of the remaining amount of the yarn in the unwinding-in-progress package and the remaining amount of the yarn in the reserve package, as the individual remaining amount information, and if the node information acquisition unit does not acquire the node information indicating presence of the node, the information management unit acquires the remaining amount of the yarn in the unwinding-in-progress package as the individual remaining amount information.

For example, the output unit of the present invention makes it possible to perceive information. Examples of the output unit include a display connected to a desktop computer and a display of a mobile terminal such as a tablet. For example, the output unit of the present invention makes it possible to receive information. Examples of the output unit include a loudspeaker connected to a desktop computer and a loudspeaker of a mobile terminal such as a tablet.

According to the first aspect of the invention, the remaining amount list information in which the sets of the individual remaining amount information of the respective processing spindles are output to the output unit in the output process. The operator is therefore able to easily grasp the timing to prepare a new yarn supply package for each of the processing spindles, based on the remaining amount list information. On this account, decrease in production efficiency of the yarn Y is suppressed by avoiding interruption of supply of the yarn Y.

According to a second aspect of the invention, the yarn processing facility is arranged so that, in the output process, the information management unit causes the output unit to output the remaining amount list information in which a number by which each of the processing spindles is specified is associated with a set of the individual remaining amount information corresponding to the each of the processing spindles.

According to the second aspect of the invention, the operator is able to easily grasp to which processing spindle each set of the individual remaining amount information in the remaining amount list information belongs, based on the number for identifying the processing spindle.

According to a third aspect of the invention, the yarn processing facility is arranged so that, in the output process, the information management unit causes the output unit to output either ascending-order remaining amount list information that is the remaining amount list information in which the sets of the individual remaining amount information corresponding to the respective processing spindles are sorted in an ascending order of individual remaining amounts or descending-order remaining amount list information that is the remaining amount list information in which the sets of the individual remaining amount information corresponding to the respective processing spindles (9) are sorted in a descending order of individual remaining amounts.

According to the third aspect of the invention, in the output process, the sets of the individual remaining amount information are sorted in the ascending order or descending order of the individual remaining amounts. The operator is therefore able to further easily grasp the timing to prepare a new yarn supply package for each of the processing spindles. It is therefore possible to further avoid the interruption of the supply of the yarn.

According to a fourth aspect of the invention, the yarn processing facility is arranged so that the information management unit includes a sorting order input unit which allows an ascending order sorting instruction of sorting the sets of the individual remaining amount information in the ascending order of the individual remaining amounts or a descending order sorting instruction of sorting the sets of the individual remaining amount information in the descending order of the individual remaining amounts to be input, and in the output process, the information management unit causes the output unit to output the ascending-order remaining amount list information when the ascending order sorting instruction is input through the sorting order input unit, and causes the output unit to output the descending-order remaining amount list information when the descending order sorting instruction is input through the sorting order input unit.

The fourth aspect of the invention makes it possible to switch the sorting order of the sets of individual remaining amount information between the ascending order and the descending order by operating the sorting order input unit.

According to a fifth aspect of the invention, the yarn processing facility is arranged so that, in the output process, the information management unit causes the output unit to output the remaining amount list information in which at least one set of the individual remaining amount information in which the individual remaining amount is equal to or smaller than a predetermined amount is listed among the sets of the individual remaining amount information corresponding to the processing spindles.

According to the fifth aspect of the invention, because the sets of the individual remaining amount information in which the individual remaining amount is equal to or smaller than the predetermined amount are listed as the remaining amount list information, the operator is able to easily grasp a processing spindle for which a new yarn supply package must be prepared soon.

According to a sixth aspect of the invention, the yarn processing facility is arranged so that, in the output process, the information management unit causes the output unit to output at least one set of the individual remaining amount information in which the individual remaining amount is equal to or smaller than a predetermined amount in a highlighted manner, among the sets of the individual remaining amount information corresponding to the processing spindles.

In the present invention, the phrase "output in a highlighted manner" indicates that, for example, when viewable information is output, a text indicating information to be highlighted is displayed to be thicker than texts indicating other information. Alternatively, for example, information to be highlighted is arranged to be different in size or color from other information. Alternatively, for example, information to be highlighted is arranged to flicker. Alternatively, for example, the background of an area where the information to be highlighted is displayed is arranged to be different in color from the background of an area where other information is displayed. Alternatively, for example, when audible information is output, sound indicating information to be highlighted is larger than sound indicating other information. Alternatively, for example, sound indicating information to be highlighted is different in pitch from sound indicating other information. The output in a highlighted manner may be achieved by a combination of at least two of the above-described methods.

According to the sixth aspect of the invention, because a set of the individual remaining amount information in which the individual remaining amount is equal to or smaller than the predetermined amount is highlighted, the operator is able to easily grasp a processing spindle for which a new yarn supply package must be prepared soon.

According to a seventh aspect of the invention, the yarn processing facility is arranged so that the output unit is a display unit configured to be able to display information regarding the yarn processor, and in the output process, the information management unit causes the display unit to display the remaining amount list information.

For example, the display unit of the present invention makes it possible to perceive information. Examples of the output unit include a display connected to a desktop computer and a display of a mobile terminal such as a tablet.

According to the seventh aspect of the invention, the operator is able to easily grasp the timing to prepare a new yarn supply package for each of the processing spindles, based on the remaining amount list information displayed on the display unit.

According to an eighth aspect of the invention, the yarn processing facility is arranged so that, in the output process, the information management unit displays the sets of the individual remaining amount information in the remaining amount list information on the display unit in an arrangement corresponding to an arrangement of the yarn supply package retaining portions of the respective processing spindles.

According to the eighth aspect of the invention, based on the arrangement of the sets of individual remaining amount information displayed on the display unit, the operator is able to easily grasp to which spindle each set of individual remaining amount information in the remaining amount list information belongs.

According to a ninth aspect of the invention, the yarn processing facility is arranged so that the output unit is a sound output unit configured to be able to output information regarding the yarn processor in the form of sound, and in the output process, the information management unit causes the sound output unit to output the remaining amount list information in the form of sound.

According to the ninth aspect of the invention, the operator is able to easily grasp the timing to prepare a new yarn supply package for each of the processing spindles, based on the remaining amount list information output from the sound output unit in the form of sound.

According to a tenth aspect of the invention, a yarn processing facility comprises: a yarn processor which includes processing spindles each of which is able to form a wound package by processing a yarn unwound from a yarn supply package and winding the yarn onto a winding bobbin; and an information management unit which is configured to be able to manage information regarding the yarn processor. The yarn processor includes, for each of the processing spindles, a yarn supply package retaining portion to which yarn supply packages including a unwinding-in-progress package from which the yarn is being unwound and a reserve package different from the unwinding-in-progress package are detachably attached, the yarn supply package retaining portion being capable of uninterruptedly supplying the yarn when a terminal portion of the yarn in the unwinding-in-progress package is joined with a start portion of the yarn in the reserve package. The information management unit includes: an output unit which is configured to be able to output information regarding the yarn processor; and a node information acquisition unit which is able to acquire node information that is information regarding presence/absence of a node of the terminal portion of the yarn in the unwinding-in-progress package and the start portion of the yarn of the reserve package, the information management unit executes: an individual remaining time information acquisition process of acquiring, for each of the processing spindles, a set of individual remaining time information which is information regarding an individual remaining time until the yarn in the yarn supply package attached to the yarn supply package retaining portion is completely unwound; and an output process of outputting, to the output unit, remaining time list information in which sets of the individual remaining time information of the respective processing spindles acquired in the individual remaining time information acquisition process, and when the individual remaining time information acquisition process is performed, if the node information acquisition unit acquires the node information indicating presence of the node, the information management unit acquires sum total of the remaining time until the yarn in the unwinding-in-progress package is completely unwound and the remaining time until the yarn in the reserve package is completely unwound, as the individual remaining time information, and if the node information acquisition unit does not acquire the node information indicating presence of the node, the information management unit acquires the remaining time until the yarn in the unwinding-in-progress package is completely unwound as the individual remaining time information.

According to the tenth aspect of the invention, the remaining time list information in which the sets of the individual remaining time information of the respective processing spindles are output to the output unit in the output process. The operator is therefore able to easily grasp the timing to prepare a new yarn supply package for each of the processing spindles, based on the remaining time list information. On this account, decrease in production efficiency of the yarn Y is suppressed by avoiding interruption of supply of the yarn Y.

According to an eleventh aspect of the invention, the yarn processing facility is arranged so that, in the output process, the information management unit causes the output unit to output the remaining time list information in which a number by which each of the processing spindles is specified is associated with a set of the individual remaining time information corresponding to the each of the processing spindles.

According to the eleventh aspect of the invention, the operator is able to easily grasp to which spindle each set of the individual remaining time information in the remaining time list information belongs, based on the identification number.

According to a twelfth aspect of the invention, the yarn processing facility is arranged so that, in the output process, the information management unit causes the output unit to output either ascending-order remaining time list information that is the remaining time list information in which the sets of the individual remaining time information corresponding to the respective processing spindles are sorted in an ascending order of individual remaining times or descending-order remaining time list information that is the remaining amount list information in which the sets of the individual remaining time information corresponding to the respective processing spindles (9) are sorted in a descending order of individual remaining times.

According to the twelfth aspect of the invention, in the output process, the sets of the individual remaining time information are sorted in the ascending order or descending order of the individual remaining times. The operator is therefore able to further easily grasp the timing to prepare a new yarn supply package for each of the processing spindles. It is therefore possible to further avoid the interruption of the supply of the yarn.

According to a thirteenth aspect of the invention, the yarn processing facility is arranged so that the information management unit includes a sorting order input unit which allows an ascending order sorting instruction of sorting the sets of the individual remaining time information in the ascending order of the individual remaining times or a descending order sorting instruction of sorting the sets of the individual remaining time information in the descending order of the individual remaining times to be input, and in the output process, the information management unit causes the output unit to output the ascending-order remaining time list information when the ascending order sorting instruction is input through the sorting order input unit, and causes the output unit to output the descending-order remaining time list information when the descending order sorting instruction is input through the sorting order input unit.

The thirteenth aspect of the invention makes it possible to switch the sorting order of the sets of individual remaining time information between the ascending order and the descending order by operating the sorting order input unit.

According to a fourteenth aspect of the invention, the yarn processing facility is arranged so that, in the output process, the information management unit causes the output unit to output the remaining time list information in which at least one set of the individual remaining time information in which the individual remaining time is equal to or shorter than a predetermined time is listed among the sets of the individual remaining time information corresponding to the processing spindles.

According to the fourteenth aspect of the invention, because the sets of the individual remaining time information in which the individual remaining time is equal to or shorter than the predetermined time are listed as the remaining time list information, the operator is able to easily grasp a processing spindle for which a new yarn supply package must be prepared soon.

According to a fifteenth aspect of the invention, the yarn processing facility is arranged so that, in the output process, the information management unit causes the output unit to output at least one set of the individual remaining time information in which the individual remaining time is equal to or shorter than the predetermined time in a highlighted manner, among the sets of the individual remaining time information corresponding to the processing spindles.

According to the fifteenth aspect of the invention, because a set of the individual remaining time information in which the individual remaining time is equal to or shorter than the predetermined time is highlighted, the operator is able to easily grasp a processing spindle for which a new yarn supply package must be prepared soon.

According to a sixteenth aspect of the invention, the yarn processing facility is arranged so that the output unit is a display unit configured to be able to display information regarding the yarn processor, and in the output process, the information management unit causes the display unit to display the remaining time list information.

According to the sixteenth aspect of the invention, the operator is able to easily grasp the timing to prepare a new yarn supply package for each of the processing spindles, based on the remaining time list information displayed on the display unit.

According to a seventeenth aspect of the invention, the yarn processing facility is arranged so that, in the output process, the information management unit displays the sets of the individual remaining time information in the remaining time list information on the display unit in an arrangement corresponding to an arrangement of the yarn supply package retaining portions of the respective processing spindles.

According to the seventeenth aspect of the invention, based on the arrangement of the sets of individual remaining time information displayed on the display unit, the operator is able to easily grasp to which spindle each set of individual remaining time information in the remaining time list information belongs.

According to an eighteenth aspect of the invention, the yarn processing facility is arranged so that the output unit is a sound output unit configured to be able to output information regarding the yarn processor in the form of sound, and in the output process, the information management unit causes the sound output unit to output the remaining time list information in the form of sound.

According to the eighteenth aspect of the invention, the operator is able to easily grasp the timing to prepare a new yarn supply package for each of the processing spindles, based on the remaining time list information output from the sound output unit in the form of sound.

According to a nineteenth aspect of the invention, the yarn processing facility is arranged so that the information management unit includes: a storage unit which is configured to be able to store information regarding the yarn processor; and a node information input unit which is configured to allow an input of the node information indicating presence of the node, and the information management unit executes: a node information storage process of storing the node information which is input through the node information input unit in the storage unit; and a node information acquisition process of allowing the node information acquisition unit to acquire the node information stored in the storage unit.

The node information input unit of the present invention is, for example, a mouse, a touch panel, or a keyboard connected to a desktop computer. For example, the node information input unit of the present invention is a touch pad, a touch panel, or a keyboard of a mobile terminal such as a tablet terminal, or a mouse connected to a mobile terminal. The node information input unit of the present invention is, for example, a physical button provided for each processing spindle in the creel stand.

According to the nineteenth aspect of the invention, because the node information indicating the presence of the node can be input by the node information input unit, it is unnecessary to provided a device such as a sensor for detecting the node.

According to a twentieth aspect of the invention, the yarn processing facility is arranged so that the yarn processor has, for each of the processing spindles, an unwound package sensor which is configured to detect from which one of the yarn supply packages attached to the yarn supply package retaining portion the yarn is being unwound, and when the unwound package sensor detects that the yarn supply package from which the yarn is unwound is switched, the information management unit executes a node information changing process of changing the node information stored in the storage unit from the node information indicating presence of the node to the node information indicating absence of the node.

When the yarn supply package from which the yarn is unwound is switched from the unwinding-in-progress package to the reserve package, the node is supplied to the wound package side. On this account, according to the twentieth aspect of the invention, when the unwound package sensor detects that the yarn supply package from which the yarn is unwound is switched, the node information is changed to the node information indicating the absence of a node, with the result that the presence/absence of the node is precisely grasped.

According to a twenty-first aspect of the invention, the yarn processing facility is arranged so that the information management unit includes: a storage unit which is configured to be able to store information regarding the yarn processor; and a node sensor which is configured to detect the node, and the yarn processing facility executes a node information storage process of storing the node information indicating presence of the node in the storage unit, when the node sensor detects the node; a node information changing process of changing the node information stored in the storage unit from the node information indicating presence of the node to the node information indicating absence of the node, when the node sensor no longer detects the node; and a node information acquisition process of allowing the node information acquisition unit to acquire the node information stored in the storage unit.

According to the twenty-first aspect of the invention, because the operator is not required to input the node information, the operations are simplified.


BRIEF DESCRIPTION OF THE DRAWINGS

FIG. 1 is a block diagram showing an electric structure of a yarn processing facility related to First Embodiment.
FIG. 2 is a side view of a false-twist texturing machine.
FIG. 3 is a schematic diagram of the false-twist texturing machine, expanded along paths (yarn paths) of yarns.
FIG. 4(a) and FIG. 4(b) are graphs each showing the relationship between the remaining amount of a yarn in a yarn supply package and a time. FIG. 4(c) is a graph showing the relationship between the wound amount of a yarn onto a winding bobbin and a time.
FIG. 5(a) shows a first screen of a list screen. FIG. 5(b) shows a remaining time list screen of a second screen of the list screen. FIG. 5(c) shows a remaining amount list screen of the second screen of the list screen.
FIG. 6 shows a first half of a flowchart showing the steps of an output process of outputting preparation determination information.
FIG. 7 shows a second half of the flowchart showing the steps of the output process of outputting preparation determination information.
FIG. 8 is a flowchart showing the steps of an individual remaining amount information acquisition process.
FIG. 9 is a schematic diagram of a false-twist texturing machine of a yarn processing facility related to Second Embodiment.
FIG. 10 shows a list screen of a modification.

DESCRIPTION OF THE PREFERRED EMBODIMENTS

<First Embodiment>

(Outline of Yarn Processing Facility)

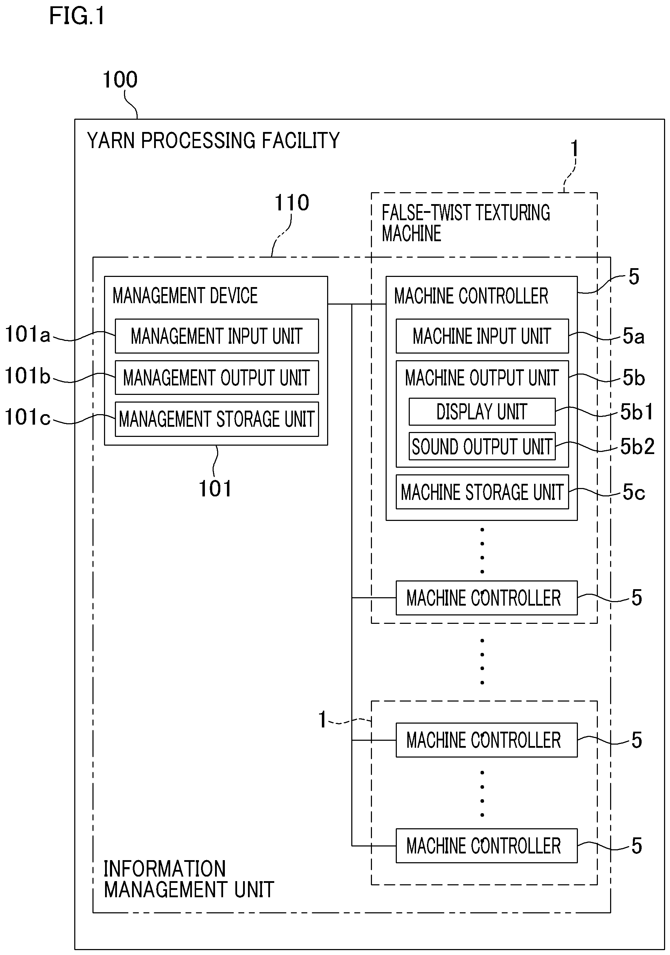

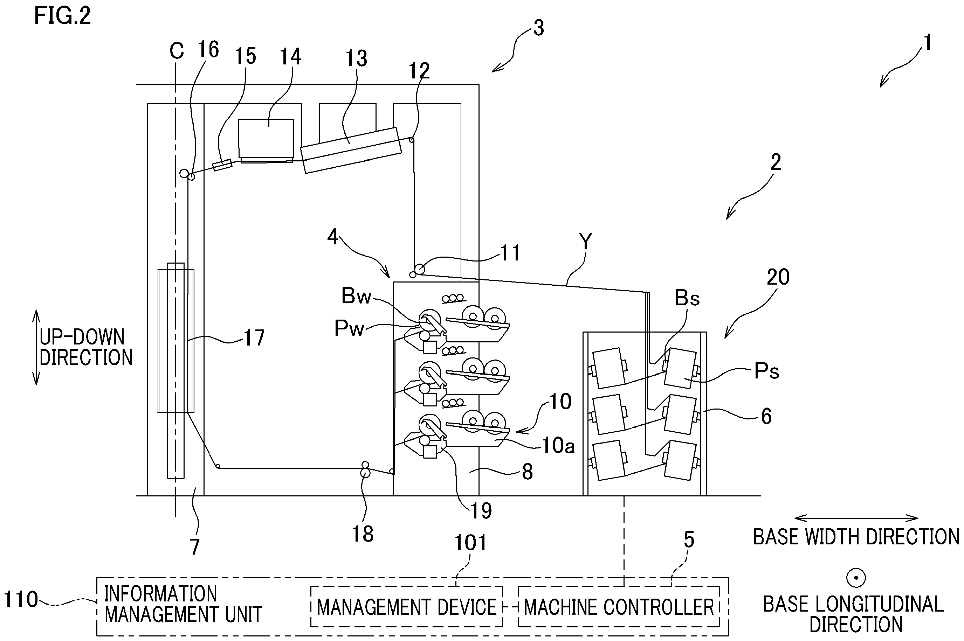

The following will describe First Embodiment of the present invention with reference to figures. The following will outline a yarn processing facility 100 of the present embodiment with reference to the block diagram of FIG. 1. As shown in FIG. 1, the yarn processing facility 100 includes false-twist texturing machines 1 (yarn processors of the present invention) and a management device 101. The false-twist texturing machines 1 are, for example, aligned along a predetermined base longitudinal direction (see e.g., FIG. 2). Each false-twist texturing machine 1 can perform false twisting of yarns Y (see e.g., FIG. 2) made of, for example, synthetic fibers such as polyester and nylon (polyamide fibers). Each yarn Y is, for example, a multi-filament yarn formed of filaments (not illustrated). As described below, each false-twist texturing machine 1 is configured to process yarns Y supplied from a yarn supplying unit 2 by a processing unit 3 and form wound packages Pw by winding the yarns Y onto winding bobbins Bw attached to a winding unit 4. Each false-twist texturing machine 1 is controlled by a machine controller 5 that is a computer device provided in each false-twist texturing machine 1. In the present embodiment, the machine controller 5 may be provided for each span included in each false-twist texturing machine 1 as described below. Alternatively, the machine controller 5 may be provided for plural spans. Alternatively, the machine controller 5 may be provided for each false-twist texturing machine 1.

The management device 101 is a host computer configured to integrally manage information acquired by the machine controllers 5. The management device 101 includes a management input unit 101a (e.g., a mouse and a keyboard), a management output unit 101b (e.g., a display), and a management storage unit 101c (e.g., a hard disk). The information management unit 110 of the present embodiment is equivalent to a combination of the management device 101 and the machine controllers 5. The information managed by the information management unit 110 will be detailed later.

(Overall Structure of False-Twist Texturing Machine)

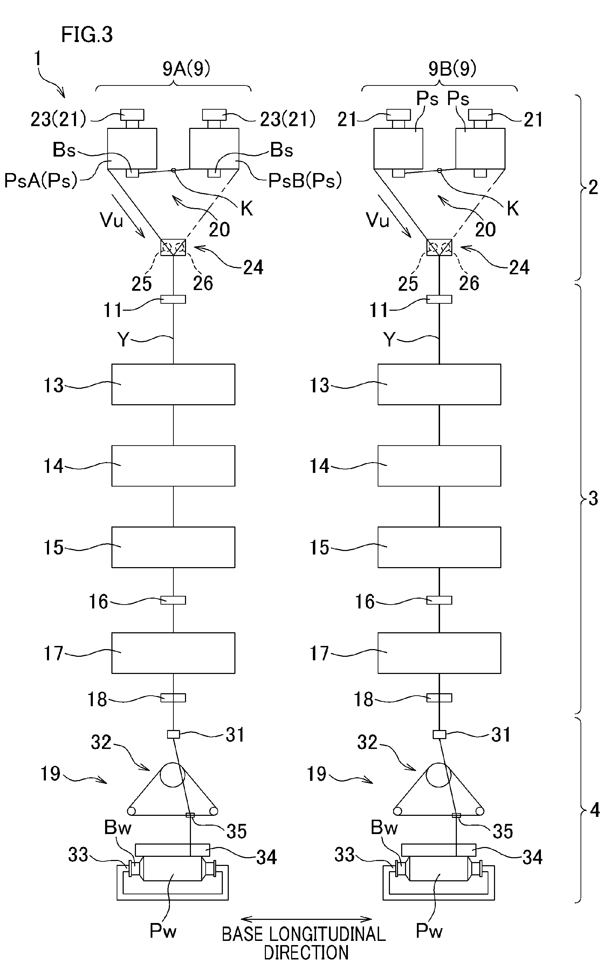

Now, the overall structure of a false-twist texturing machine 1 will be described with reference to FIG. 2 and FIG. 3. The direction orthogonal to the plane of FIG. 2 is equivalent to the base longitudinal direction described above. The left-right direction relative to the plane of FIG. 2 is equivalent to a base width direction. The direction orthogonal to the base longitudinal direction and the base width direction is defined as the up-down direction (vertical direction) in which the gravity acts. A direction in which a yarn Y runs will be referred to as a yarn running direction. The false-twist texturing machine 1 includes a yarn supplying unit 2 for supplying the yarns Y, a processing unit 3 which processes (false-twists) the yarns Y supplied from the supplying unit 2, a winding unit 4 which winds the yarns Y processed by the processing unit 3 onto a winding bobbins Bw, and the machine controller 5.

The yarn supplying unit 2 includes a creel stand 6 retaining yarn supply packages Ps, and is configured to be able to simultaneously supply the yarns Y to the processing unit 3. The processing unit 3 is configured to unwind the yarn Y from a yarn supply package Ps at the yarn supplying unit 2. In the processing unit 3, the following members are provided in this order from the upstream in the yarn running direction: first feed rollers 11; a twist-stopping guide 12; a first heater 13; a cooler 14; a false-twisting device 15; second feed rollers 16; a second heater 17; and third feed rollers 18. These constituent features of the processing unit 3 are provided in, for example, each of later-described spindles 9 (see FIG. 3). The winding unit 4 includes plural winding devices 19. Each winding device 19 winds the yarn Y for which the false winding has been performed at the processing unit 3 onto the winding bobbin Bw, and forms a wound package Pw. The winding part 4 is further provided with automatic doffers 10 which correspond to the respective winding devices 19 and are configured to replace completed wound packages Pw with new empty winding bobbins Bw.

The machine controller 5 is configured to control the constituent features of the yarn supplying unit 2, the processing unit 3, and the winding unit 4. The machine controller 5 is, for example, a typical desktop or mobile computer device. The machine controller 5 includes a machine input unit 5a (node information input unit of the present invention), a machine output unit 5b (output unit of the present invention), and a machine storage unit 5c (storage unit of the present invention) (see FIG. 1).

The machine input unit 5a is arranged to be operable by an operator. The machine input unit 5a is, for example, constituted by at least one of a mouse, a touch panel, and a keyboard that are not illustrated. The machine output unit 5b is configured to be able to output information. In the present embodiment, the machine output unit 5b includes a display unit 5b1 and a sound output unit 5b2. The machine output unit 5b may include only the display unit 5b1. The machine output unit 5b may include only the sound output unit 5b2. The display unit 5b1 is configured to be able to display viewable information. A specific example of the display unit 5b1 is a display. The sound output unit 5b2 is configured to be able to output audible information in the form of sound. A specific example of the sound output unit 5b2 is a loudspeaker. The machine storage unit 5c is configured to store various sets of information for controlling the constituent features of the yarn supplying unit 2, the processing unit 3, and the winding unit 4.

The machine controller 5 is configured to control the constituent features of the yarn supplying unit 2, the processing unit 3, and the winding unit 4 based on the sets of information. Alternatively, the machine controller 5 may indirectly control the constituent features of the yarn supplying unit 2, the processing unit 3, and the winding unit 4 through controllers (not illustrated) for controlling these constituent features. The machine controller 5 is electrically connected to the management device 101 which is a host computer. The management device 101 is capable of performing later-described determinations and/or calculations by utilizing information acquired by the machine controller 5.

Each of the false-twist texturing machines 1 includes a main base 7 and a winding base 8 which are placed to be spaced apart from each other in the base width direction. The main base 7 and the winding base 8 are substantially identical in length in the base longitudinal direction. The main base 7 and the winding base 8 are arranged to face each other in the base width direction. The false-twist texturing machine 1 includes units which are termed spans each of which includes a pair of the main base 7 and the winding base 8. In one span, each device is placed so that the yarns Y running while being aligned in the base longitudinal direction can be subjected to false-twist texturing at the same time. In the false-twist texturing machine 1, the spans are placed in a left-right symmetrical manner to the sheet, with a center line C of the base width direction of the main base 7 as a symmetry axis (main base 7 is shared between the left span and the right span). The spans are aligned in the base longitudinal direction.

A group of constituent features through which a single yarn Y supplied from the yarn supplying unit 2 passes before reaching the winding unit 4 is termed a spindle. To put it differently, each of the false-twist texturing machines 1 includes spindles 9 (processing spindles of the present invention; see FIG. 3) that are identical in number with the winding devices 19 included in each false-twist texturing machine 1. For example, FIG. 3 shows two spindles 9 (spindles 9A and 9B). Roughly speaking, the spindles 9 are aligned along the base longitudinal direction. The inclusion relation is as follows: the false-twist texturing machine 1 includes plural spans, and each span includes plural spindles 9. The false-twist texturing machine 1 is able to false-twist the yarn Y in the spindle 9 to which the yarn Y is threaded.

(Yarn Supplying Unit)

The structure of the yarn supplying unit 2 will be described with reference to FIG. 2 and FIG. 3. The creel stand 6 of the yarn supplying unit 2 includes yarn supply package retaining portions 20 which correspond to the respective spindles 9. As shown in FIG. 2, in the creel stand 6, three yarn supply package retaining portions 20 are lined up in the up-down direction. In the present embodiment, in each span, three yarn supply package retaining portions 20 lined up in the up-down direction form one group, and four groups of the yarn supply package retaining portions 20 are lined up in the base longitudinal direction.

Each of the yarn supply package retaining portions 20 is arranged so that two yarn supply packages Ps are attached and detached to and from the portion. In other words, as shown in FIG. 3, each yarn supply package retaining portion 20 has two package attachment units 21. For the sake of convenience, one of the two package attachment units 21 is termed a first attachment unit 22, whereas the other is termed a second attachment unit 23. To and from each of the first attachment unit 22 and the second attachment unit 23, a single yarn supply package Ps can be attached and detached. The attachment and detachment of the yarn supply packages Ps to and from the package attachment units 21 are performed by an operator.

Each yarn supply package retaining portion 20 of the yarn supplying unit 2 is arranged to be able to uninterruptedly supply the yarn Y by the arrangement described below. For example, as shown in FIG. 3, a yarn supply package PsA that is one of the yarn supply packages Ps is attached to the first attachment unit 22. On the other hand, another yarn supply package PsB different from the yarn supply package PsA is attached to the second attachment unit 23. When the yarn Y is being unwound from the yarn supply package PsA, the yarn supply package PsA is equivalent to the unwinding-in-progress package of the present invention. The yarn supply package PsB in this case is equivalent to a reserve package of the present invention. A terminal portion of the yarn Y in the yarn supply package PsA is joined with (connected to) a start portion of the yarn Y in the yarn supply package PsB. Due to this, a node K is formed between the two yarns Y.

This arrangement makes it possible to uninterruptedly supply the yarn Y from the yarn supply package PsB after the yarn supply package PsA becomes empty. To be more specific, immediately after the supply of the yarn Y from the yarn supply package PsA ends and the yarn supply package PsA becomes empty, the node K is pulled to the downstream side in the yarn running direction (i.e., to the winding device 19 side), with the result that the yarn Y is unwound from the yarn supply package PsB. In other words, after unwinding of the yarn Y from the yarn supply package Ps attached to one package attachment unit 21 is completed, unwinding of the yarn Y from the next yarn supply package Ps attached to the other package attachment unit 21 starts. For the sake of convenience, this action will be referred to as yarn supply package switching. Because of this, the yarn Y is uninterruptedly supplied. Thereafter, the yarn supply package Ps (yarn supplying bobbin Bs) having become empty is replaced with a new yarn supply package Ps by the operator.

On the downstream side in the yarn running direction of each yarn supply package retaining portion 20, an unwound package sensor 24 is provided. The unwound package sensor 24 is configured to be able to detect to which one of the attachment units, the first attachment unit 22 or the second attachment unit 23, the yarn supply package Ps from which the yarn Y is being unwound is attached. As shown in FIG. 3, the unwound package sensor 24 includes a first detection unit 25 and a second detection unit 26. The first detection unit 25 is configured to be able to detect whether the yarn Y is being unwound from the yarn supply package Ps attached to the first attachment unit 22. The second detection unit 26 is configured to be able to detect whether the yarn Y is being unwound from the yarn supply package Ps attached to the second attachment unit 23. Each of the first detection unit 25 and the second detection unit 26 is, for example, an optical sensor configured to optically detect the yarn Y. For further details of the unwound package sensor 24, see e.g., Japanese Patent No. 5873105. Alternatively, the first detection unit 25 and the second detection unit 26 may be contact sensors, for example.

(Processing Unit)

The structure of the processing unit 3 will be described with reference to FIG. 2 and FIG. 3. The following will describe only portions of the processing unit 3, which correspond to one spindle 9.

The first feed rollers 11 are arranged to unwind a yarn Y from a yarn supply package Ps attached to the yarn supplying unit 2 and feed the yarn Y to the first heater 13. The conveyance speed of conveying the yarn Y by the first feed rollers 11 is substantially identical with unwinding speed Vu (see FIG. 3) at which the yarn Y is unwound from the yarn supply package Ps. Information of a set value of the conveyance speed of the yarn Y by the first feed rollers 11 is stored in, for example, the machine controller 5 in advance. The twist-stopping guide 12 is provided to prevent twist of the yarn Y formed by the false-twisting device 15 from being propagated to the upstream in the yarn running direction of the twist-stopping guide 12.

The first heater 13 heats the yarns Y sent from the first feed rollers 11. In the present embodiment, the first heater 13 is arranged to heat a single yarn Y for the sake of simplicity. The disclosure, however, is not limited to this arrangement. The first heater 13 may be arranged to be able to simultaneously heat plural yarns Y.

The cooler 14 is configured to cool the yarn Y heated at the first heater 13. In the present embodiment, the cooler 14 is arranged to cool a single yarn Y for the sake of simplicity. The disclosure, however, is not limited to this arrangement. The cooler 14 may be arranged to be able to simultaneously cool plural yarns Y.

The false-twisting device 15 is configured to twist the yarn Y. The false-twisting device 15 is a so-called disc-friction-type false-twisting device, for example. The disclosure, however, is not limited to this arrangement. The second feed rollers 16 are configured to send the yarns Y processed by the false-twisting device 15 to the second heater 17. The conveyance speed of conveying the yarn Y by the second feed rollers 16 is higher than the conveyance speed of conveying the yarn Y by the first feed rollers 11. The yarn Y is therefore drawn between the first feed rollers 11 and the second feed rollers 16. Information of a set value of the conveyance speed of the yarn Y by the second feed rollers 16 is stored in, for example, the machine controller 5 in advance.

The second heater 17 heats the yarn Y sent from the second feed rollers 16. The second heater 17 extends along the vertical direction. The second heater 17 is arranged to heat a single yarn Y for the sake of simplicity. The disclosure, however, is not limited to this arrangement. The second heater 17 may be arranged to be able to simultaneously heat plural yarns Y.

The third feed rollers 18 send the yarn Y heated by the second heater 17 to the winding device 19. The conveyance speed of conveying the yarn Y by the third feed rollers 18 is lower than the conveyance speed of conveying the yarn Y by the second feed rollers 16. The yarn Y is therefore relaxed between the second feed rollers 16 and the third feed rollers 18. Information of a set value of the conveyance speed of the yarn Y by the third feed rollers 18 is stored in, for example, the machine controller 5 in advance.

In the processing unit 3 arranged as described above, the yarn Y drawn between the first feed rollers 11 and the second feed rollers 16 is twisted by the false-twisting device 15. The twist formed by the false-twisting devices 15 propagates to the twist-stopping guide 12 but does not propagate to the upstream of the twist-stopping guide 12 in the yarn running direction. The yarn Y which is twisted and drawn is heated at the first heater 13 and thermally set. After that, the yarn Y is cooled at the cooler 14. The yarn Y is untwisted on the downstream of the false-twisting device 15. However, each filament is maintained to be wavy in shape on account of the thermal setting described above. After being false-twisted by the false-twisting device 15, the yarn Y is thermally set at the second heater 17 while being relaxed between the second feed rollers 16 and the third feed rollers 18, and then the yarn Y is guided to the downstream side in the yarn running direction. Finally, the yarn Y sent from the third feed rollers 18 is wound onto the winding bobbin Bw by the winding device 19. Accordingly, the wound package Pw is formed.

(Winding Unit)

The structure of the winding unit 4 will be described with reference to FIG. 2 and FIG. 3. The following will describe only portions of the winding unit 4, which correspond to one spindle 9.

The winding device 19 includes a fulcrum guide 31, a traverse device 32, a cradle 33, and a winding roller 34. The fulcrum guide 31 is a guide which functions as a fulcrum when the yarn Y is traversed. For example, the traverse unit 32 can traverse the yarn Y by a traverse guide 35 which is attached to an endless belt driven in a reciprocating manner by a motor. The cradle 33 can support the winding bobbin Bw (wound package Pw) to be rotatable. The winding roller 34 is arranged to rotate the wound package Pw and to apply contact pressure to the surface of the wound package Pw. The winding roller 34 is rotationally driven by an unillustrated motor while being in contact with the surface of the wound package Pw, for example. With this arrangement, the wound package Pw is passively rotated by the friction force and the shape of the wound package Pw is adjusted by the contact pressure applied to the surface of the wound package Pw. Instead of rotationally driving the winding roller 34, the wound package Pw may be directly rotationally driven by an unillustrated motor.

The automatic doffer 10 is arranged to detach the wound package Pw from the winding device 19 and attach an empty winding bobbin Bw to the winding device 19. To put it differently, the automatic doffer 10 is arranged to be able to replace the completed wound package Pw with an empty winding bobbin Bw in the winding unit 4. The automatic doffer 10 is provided with an unillustrated cutter which is able to cut the yarn Y at around the wound package Pw. As the running yarn Y is cut by the cutter, the formation of the wound package Pw is completed. Even after the yarn is cut by the cutter, the yarn Y is unwound from the yarn supply package Ps at substantially the same speed as the winding onto the winding bobbin Bw, and is kept supplied to the winding device 19 side. The automatic doffer 10 includes an unillustrated suction which is able to suck, capture, and hold the running yarn supplied to the winding device 19, after the finish of the formation of the wound package Pw and until the start of the winding of the yarn Y onto the next winding bobbin Bw. Before the yarn Y is threaded to the winding bobbin Bw to which the yarn Y is to be wound next, a part of the yarn Y sucked by the suction is removed. For details of the structure of the automatic doffer 10, see Japanese Laid-Open Patent Publication No. H6-212521, for example.

In addition to the above, the automatic doffer 10 includes a stocker 10a. The stocker 10a is arranged to be able to temporarily store a wound package Pw that is completely formed and detached from the winding device 19. The wound packages Pw stored in the stocker 10a are collected by the operator.

In the vicinity of the winding device 19, an unillustrated yarn threading device is provided, for example. The yarn threading device is configured to thread the yarn Y to an empty winding bobbin Bw attached to the winding device 19.

In the winding unit 4 structured as above, the yarn Y which is sent from the third feed rollers 18 described above is wound onto the winding bobbin Bw by each winding device 19, and the wound package Pw is formed (winding process). As the yarn Y is cut by the cutter of the automatic doffer 10, the winding process of winding the yarn Y onto the winding bobbin Bw is finished. Almost at the same time, the yarn Y supplied to the winding device 19 is sucked and retained by the suction, and the wound package Pw is detached from the cradle 33 by the automatic doffer 10. Immediately after this, a new empty winding bobbin Bw is attached to the cradle 33 by the automatic doffer 10. Furthermore, the yarn Y is threaded to the new winding bobbin Bw by the yarn threading device. As a result, it becomes possible to start winding of the yarn Y onto the new winding bobbin Bw.

The arrangement above makes it possible in each spindle 9 of the false-twist texturing machine 1 to serially form the wound packages Pw at the winding unit 4 after the yarn Y is uninterruptedly supplied from the yarn supplying unit 2 and false-twisted at the processing unit 3. However, when the remaining amount of the yarn Y in each of all yarn supply packages Ps attached to the yarn supply package retaining portion 20 of the yarn supplying unit 2 becomes zero, the supply of the yarn Y from the yarn supplying unit 2 is no longer possible. When the supply of the yarn Y becomes no longer possible, it is necessary to perform operations such as yarn threading by which the yarn Y pulled out from a yarn supply package Ps attached to the yarn supply package retaining portion 20 of the yarn supplying unit 2 is threaded to each constituent feature of the processing unit 3. Due to this, the production efficiency of the yarn Y is deteriorated.

In order to avoid the interruption of the supply of the yarn Y, after the yarn supply package Ps attached to one of the package attachment units 21 of the yarn supply package retaining portion 20 becomes empty, the operator needs to prepare a new yarn supply package Ps before the remaining amount of the yarn Y in the yarn supply package Ps attached to the other package attachment unit 21 becomes zero. A specific example of the preparation of a new yarn supply package Ps is such that an empty yarn supply package Ps (yarn supplying bobbin Bs) attached to one of package attachment units 21 is detached and a new yarn supply package Ps is attached. Then a terminal portion of the yarn that is being unwound from the yarn supply package Ps attached to the other package attachment unit 21 is connected to a start portion of the yarn in the new yarn supply package Ps attached to the one package attachment unit 21.

In the know facility, however, it is difficult to grasp the timing to prepare a new yarn supply package Ps for each of the spindles 9. That is to say, for example, the operator is required to check the yarn supply package Ps attached to the yarn supply package retaining portion 20 of each spindle 9 by, for example, visual observation and to determine for which one of the spindles 9 a new yarn supply package Ps must be prepared.

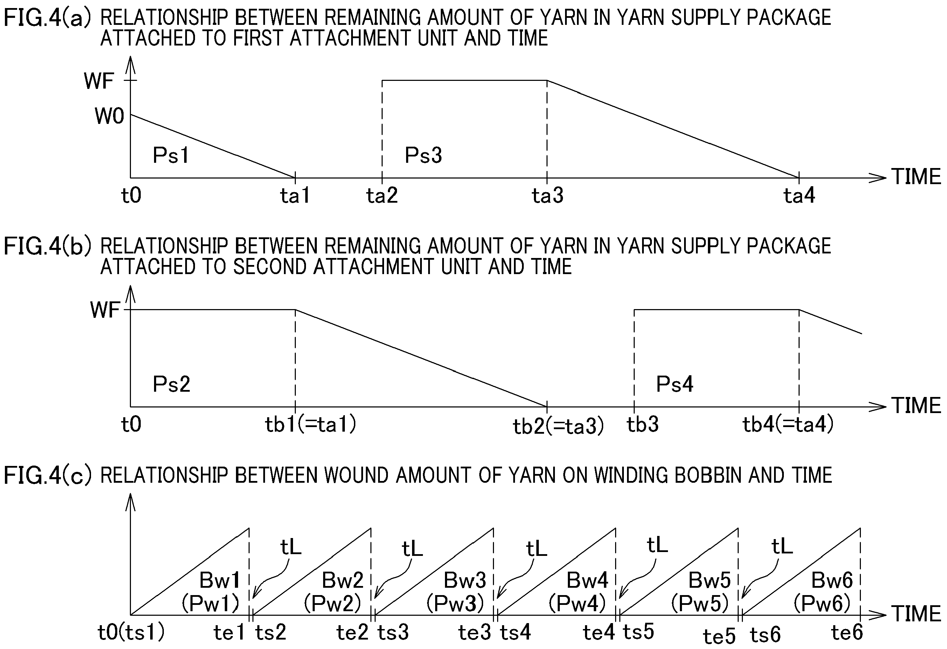

On this account, based on information acquired by performing later-described information processing, the information management unit 110 outputs, to the machine output unit 5b, information used for determining for which one of the spindles 9 a new yarn supply package Ps must be prepared. To be more specific, the information management unit 110 causes the machine output unit 5b to output remaining amount list information and remaining time list information that are described below. In a specific example, the information management unit 110 acquires and manages sets of information related to matters shown in graphs in FIG. 4(a) to FIG. 4(c). Hereinafter, unless otherwise specified, the explanation deals with one specific spindle 9 among the spindles 9.

(Specific Examples of Matters)

Before the information acquired by the information management unit 110 is specifically described, the following will describe matters shown in the graphs in FIG. 4(a) to FIG. 4(c) and times at which the respective matters occur, as background knowledge for easier understanding of the explanations below. The information management unit 110 acquires information related to at least one of the matters shown in the graphs in FIG. 4(a) to FIG. 4(c) (details will be given later). Each time described below is not a time predicted by a prediction means but a time at which each matter actually occurs.

FIG. 4(a) is a graph showing the relationship between the remaining amount (vertical axis) of a yarn Y in a yarn supply package Ps (specifically, a yarn supply package Ps1, Ps3) attached to the first attachment unit 22 and a time (horizontal axis). FIG. 4(b) is a graph showing the relationship between the remaining amount (vertical axis) of a yarn Y in a yarn supply package Ps (specifically, a yarn supply package Ps2, Ps4) attached to the second attachment unit 23 and a time (horizontal axis). FIG. 4(c) is a graph showing the relationship between the wound amount (vertical axis) of a yarn Y on a winding bobbin Bw (specifically, a winding bobbin Bw1, Bw2, Bw3, Bw4, Bw5, Bw6) and a time (horizontal axis). In all of the graphs in FIG. 4(a) to FIG. 4(c), a time t0 at which winding of the yarn Y onto the winding bobbin Bw1 starts is the origin. In the present embodiment, in a state in which the yarn Y has not been unwound from each yarn supply package Ps at all (i.e., each package is fully wound), the weight (initial weight) of each yarn supply package Ps is WF.

To begin with, at the time t0, the yarn supply package Ps1 has been attached to the first attachment unit 22. The yarn supply package Ps2 has been attached to the second attachment unit 23. The remaining weight of the yarn Y in the yarn supply package Ps1 is W0 (that is smaller than WF). The remaining weight of the yarn Y in the yarn supply package Ps2 is WF. A terminal portion of the yarn Y in the yarn supply package Ps1 is joined with a start portion of the yarn Y in the yarn supply package Ps2 so that a node K is formed.

At a time t0 (time ts1), the attachment of a winding bobbin Bw1 to the cradle 33 by the automatic doffer 10 is completed, and winding of the yarn onto the winding bobbin Bw1 starts. On this account, the time ts1 is the winding start time at which winding of the yarn Y onto the winding bobbin Bw1 starts. At the same time, the yarn Y is unwound from a yarn supply package Ps1. As time passes, the remaining amount (remaining weight) of the yarn Y in the yarn supply package Ps1 decreases whereas the wound amount (wound weight) of the yarn Y wound onto the winding bobbin Bw1 increases. At a time te1, as the yarn Y is cut by the cutter of the automatic doffer 10, the winding process of winding the yarn Y onto the winding bobbin Bw1 is finished. On this account, the time te1 is a winding end time at which winding of the yarn Y onto the winding bobbin Bw1 ends. Onto the winding bobbin Bw1, only the yarn Y supplied from the yarn supply package Ps1 has been wound. Cutting of the yarn Y by the cutter, suction and capture of the yarn Y by the suction, and detachment of the winding bobbin Bw1 (wound package Pw1) from the cradle 33 are almost simultaneously performed. Subsequently, at a time ts2 immediately after the time te1, attachment of the winding bobbin Bw2 to the cradle 33 by the automatic doffer 10 is completed and winding of the yarn Y onto the winding bobbin Bw2 starts. There is a slight time lag tL between the winding end time (te1) of the winding bobbin Bw1 and the winding start time (ts2) of the winding bobbin Bw2 onto which the yarn Y is to be wound next to the winding bobbin Bw1.

At a time ta1 after the time ts2, the yarn supply package Ps1 attached to the first attachment unit 22 becomes empty. At the same time as the yarn supply package Ps1 becomes empty, at a time tb1 (= the time ta1), the node K formed by joining the yarn Y in the yarn supply package Ps1 with the yarn Y in the yarn supply package Ps2 is pulled toward the winding device 19 side. As a result, unwinding of the yarn Y from the yarn supply package Ps2 attached to the second attachment unit 23 starts. At a time te2, the winding process of winding the yarn Y onto the winding bobbin Bw2 ends (formation of the wound package Pw2 finishes) and a winding process of winding the yarn Y onto a winding bobbin Bw3 starts at a time ts3. At a time te3, the winding process of winding the yarn Y onto the winding bobbin Bw3 ends (formation of the wound package Pw3 finishes).

At a time ta2 which is after the time ta1 and before the yarn supply package Ps2 becomes empty, detachment of the yarn supply package Ps1 from the first attachment unit 22 and attachment of a yarn supply package Ps3 to the first attachment unit 22 are performed by the operator. The remaining weight of the yarn supply package Ps3 at this stage is WF. Thereafter, a terminal portion of the yarn Y in the yarn supply package Ps2 is joined with a start portion of the yarn Y in the yarn supply package Ps3 by the operator so that a node K is formed. The joining may be manually done by the operator. Alternatively, the operator may perform the joining by operating an unillustrated portable joining device, for example.

The other matters will be briefly explained. Matters related to the winding unit 4 are as follows. From a time ts4 to a time te4, the yarn Y is wound onto a winding bobbin Bw4 (a wound package Pw4 is formed). From a time ts5 to a time te5, the yarn Y is wound onto a winding bobbin Bw5 (a wound package Pw5 is formed). From a time ts6 to a time te6, the yarn Y is wound onto a winding bobbin Bw6 (a wound package Pw6 is formed). Matters related to the yarn supplying unit 2 are as follows. At a time tb2 (= the time ta3) between the time ts4 and the time te4, the yarn supply package Ps2 becomes empty and unwinding of the yarn Y from the yarn supply package Ps3 starts. Thereafter, at a time tb3, the yarn supply package Ps2 is replaced with a yarn supply package Ps4. At a time ta4 (= the time tb4) between the time ts6 and the time te6, the yarn supply package Ps3 becomes empty and unwinding of the yarn Y from the yarn supply package Ps4 starts.

(Basic Information of Yarn Supply Package)

Based on the background knowledge described above, to begin with, basic information of a yarn supply package Ps which is acquired by the information management unit 110 will be described. As the basic information of a yarn supply package Ps, for example, the information management unit 110 acquires initial amount information, unwinding unit amount information, and cumulative time information of each yarn supply package Ps. These sets of information can be used for acquiring management information (detailed later) of each yarn supply package Ps.

The initial amount information is information related to an initial amount (initial weight or initial length) of a yarn Y in a yarn supply package Ps before unwinding of the yarn Y starts. The initial amount information is, for example, set in advance in the machine controller 5 as information in common between all yarn supply packages Ps of all spindles 9 of a single false-twist texturing machine 1. As more specific information, in the present embodiment, information of the above-described initial weight (i.e., WF) and information of fineness (i.e., weight per unit length) of the yarn Y are stored in the machine controller 5 as the initial amount information. The unit of the weight of the yarn supply package Ps is, for example, kilogram. The fineness of the yarn Y is represented as F. The unit of the fineness is, for example, dtex (decitex). Decitex indicates the weight (gram) of the yarn Y per 10000 meters.

The unwinding unit amount information is information regarding the amount of a yarn Y unwound from a yarn supply package Ps per unit time. The unwinding unit amount information is, for example, information of the above-described unwinding speed Vu. In the present embodiment, for the sake of convenience, the unwinding speed Vu is substantially constant during a winding process. The unit of the unwinding speed is, for example, meter per minute. The unwinding unit amount information is, for example, set in advance in the machine controller 5 as information in common between all of all spindles 9 of a single false-twist texturing machine 1. The machine controller 5 acquires information of the unwinding speed Vu based on, for example, the information of a set value of the rotation number of the first feed rollers 11.

The cumulative time information is information regarding the total time of unwinding of a yarn Y from a yarn supply package Ps (cumulative time). For the sake of convenience, the cumulative time of a yarn supply package Ps from which a yarn Y is unwound is represented as tinU. The cumulative time information is acquired in the following manner. During the winding process, the machine controller 5 determines whether yarn supply package switching in which the yarn supply package Ps supplying the yarn Y is switched has occurred, based on a detection result of the unwound package sensor 24. For example, in FIG. 4(a) and FIG. 4(b), the yarn supply package switching is a matter in which unwinding of the yarn Y from the yarn supply package Ps1 ends (end of unwinding) and unwinding of the yarn Y from the yarn supply package Ps2 starts. When the state of the unwound package sensor 24 is switched from a state in which the yarn Y is detected by one of the first detection unit 25 and the second detection unit 26 to a state in which the yarn Y is detected by the other of the first detection unit 25 and the second detection unit 26, the machine controller 5 determines that the yarn supply package switching has occurred. When the machine controller 5 determines that the yarn supply package switching has occurred, the machine controller 5 sets tinU at a predetermined initial time (reset process). The initial time is zero, for example. The machine controller 5 may acquire the unwinding start time (i.e., the time ta1) at which the unwinding of the yarn Y from the yarn supply package Ps2 starts and store the acquired information.

Thereafter, the machine controller 5 increases tinU over time (updates tinU) while the yarn Y is being unwound from the yarn supply package Ps2. When, the unwinding of the yarn Y from the yarn supply package Ps2 is temporarily stopped due to, for example, yarn breakage, the machine controller 5 temporarily stops the update of tinU. In this way, the machine controller 5 acquires the information of the cumulative time during which the yarn Y is unwound from the yarn supply package Ps2. Likewise, when the unwinding of the yarn Y from the yarn supply package Ps2 ends and when unwinding of the yarn Y from the yarn supply package Ps3 starts, the machine controller 5 executes the above-described reset process (i.e., sets tinU at the initial time) based on a detection result of the unwound package sensor 24. Thereafter, as the machine controller 5 updates tinU over time, the information of the cumulative time of unwinding of the yarn Y from the yarn supply package Ps3 is acquired. In this way, when the yarn Y is being unwound from a yarn supply package Ps, the machine controller 5 is able to acquire the cumulative time information of that yarn supply package Ps.

As described above, the information management unit 110 acquires the initial amount information, the unwinding unit amount information, and the cumulative time information as the basic information of the yarn supply package Ps.

(Information Regarding Preparation of New Yarn Supply Package)

As described above, after the yarn supply package Ps attached to one of the package attachment units 21 of the yarn supply package retaining portion 20 becomes empty, the operator needs to prepare a new yarn supply package Ps before the remaining amount of the yarn Y in the yarn supply package Ps attached to the other package attachment unit 21 becomes zero. The following will describe information that the information management unit 110 acquires when preparation of a new yarn supply package Ps is performed. When a new yarn supply package Ps is prepared, to begin with, the operator detaches an empty yarn supply package Ps from one package attachment unit 21 and attaches a new yarn supply package Ps to the one package attachment unit 21. Furthermore, the operator joins the start portion of the yarn Y in the new yarn supply package Ps with the terminal portion of the yarn Y in the yarn supply package Ps attached to the other package attachment unit 21, so as to form a node K. Subsequently, the operator inputs node information indicating the presence of a node K to the machine controller 5 through the machine input unit 5a. In other words, the machine input unit 5a functions as a node information input unit of the present invention.

The machine storage unit 5c of the machine controller 5 stores node information that is information indicating the presence/absence of a node K. When the node information indicating the presence of a node K is input through the machine input unit 5a, the machine controller 5 changes the node information stored in the machine storage unit 5c from node information indicating absence of a node K to node information indicating presence of a node K (node information storage process). Thereafter, when the yarn supply package switching occurs, the machine controller 5 changes the node information stored in the machine storage unit 5c to node information indicating the absence of a node K (node information changing process).

To put it differently, when the node information stored in the machine storage unit 5c is node information indicating the presence of a node K, a yarn supply package Ps (reserve package) from which the yarn Y will be unwound after the unwinding-in-progress package has already been prepared. On the other hand, when the node information stored in the machine storage unit 5c is node information indicating the absence of a node K, a yarn supply package Ps (reserve package) from which the yarn Y will be unwound after the unwinding-in-progress package has not been prepared yet.

(Method of Acquiring Management Information of Yarn Supply Package)

The following will describe an example of a method of how the information management unit 110 acquires the management information of a yarn supply package Ps. In the present embodiment, the management information of the yarn supply package Ps includes individual remaining amount information regarding an individual remaining amount that is the remaining amount of the yarn Y in each spindle 9. In the present embodiment, furthermore, the management information of the yarn supply package Ps includes individual remaining time information regarding an individual remaining time that is a remaining time until the yarn Y is completely unwound at each spindle 9. For each of the spindles 9 in each of the false-twist texturing machines 1, the information management unit 110 acquires the individual remaining amount information and the individual remaining time information.

The individual remaining amount indicates the remaining amount of the yarn Y in one or two yarn supply package Ps attached to the yarn supply package retaining portion 20 at a given time T. In the present embodiment, the individual remaining amount indicates the ratio of the remaining weight of the yarn Y in the yarn supply package Ps (i.e., the ratio (percentage) of the remaining weight to the initial weight). The individual remaining amount may indicate the remaining weight of the yarn Y in the yarn supply package Ps. Alternatively, the individual remaining amount may indicate the length of the remaining yarn Y in the yarn supply package Ps. The individual remaining time indicates a remaining time until the yarn Y included in one or two yarn supply package Ps attached to the yarn supply package retaining portion 20 at a given time T is completely unwound.

The information management unit 110 acquires the node information stored in the machine storage unit 5c, and acquires the individual remaining amount information based on the node information. That is to say, when having acquired the node information indicating the presence of a node K, the information management unit 110 acquires, as the individual remaining amount information, the total of the remaining amount of the yarn Y in the unwinding-in-progress package and the remaining amount of the yarn Y in the reserve package. When having acquired the node information indicating the absence of a node K, the information management unit 110 acquires, as the individual remaining amount information, the remaining amount of the yarn Y in the unwinding-in-progress package. In other words, the individual remaining amount is an amount of the yarn Y, which can be uninterruptedly supplied from the yarn supply package retaining portion 20 at the moment. The smaller the individual remaining amount indicated in the individual remaining amount information is, the sooner the timing to prepare a new yarn supply package Ps comes.

Because unwinding from the reserve package has not started, the remaining amount of the yarn Y in the reserve package is 100 %. When the remaining weight of the yarn Y in the unwinding-in-progress package is Wr, Wr can be calculated by, for example, the following Equation 1 by utilizing tinU at a given time T. In the equation 1, A is a coefficient for representing a result of calculation in parentheses in units of kilogram.

$$Wr=WF-(A \times Vu \times F \times tinU) \quad (Equation\ 1)$$

The individual remaining amount when the node information acquired by the information management unit 110 indicates the presence of a node K (the ratio of the remaining weight), i.e., the ratio of the total of the remaining weight of the yarn Y in the unwinding-in-progress package and the remaining weight of the yarn Y in the reserve package is calculated by the following Equation 2.

$$\{(Wr/WF) \times 100\}+100 \quad (Equation\ 2)$$

The individual remaining amount when the node information acquired by the information management unit 110 indicates the absence of a node K (the ratio of the remaining weight), i.e., the ratio of the remaining weight of the yarn Y in the unwinding-in-progress package is calculated by the following Equation 3.

$$(Wr/WF) \times 100 \quad (Equation\ 3)$$

The information management unit 110 acquires the node information stored in the machine storage unit 5c and acquires the individual remaining time information based on the node information. In other words, when having acquired the node information indicating the presence of a node K, the information management unit 110 acquires, as the individual remaining time information, the total of the remaining time until the unwinding of the yarn Y from the unwinding-in-progress package is completed and the remaining time until the unwinding of the yarn Y from the reserve package is completed. When having acquired the node information indicating the absence of a node K, the information management unit 110 acquires, as the individual remaining time information, the remaining time until unwinding of the yarn Y in the unwinding-in-progress package is completed. In other words, the individual remaining time is a remaining time during which the yarn Y can be uninterruptedly unwound from the yarn supply package retaining portion 20 at the moment. The shorter the individual remaining time indicated by the individual remaining time information is, the sooner the timing to prepare a new yarn supply package Ps comes.

The information management unit 110 may calculate the individual remaining time of each of the spindles 9 based on the remaining weight (Wr) of the yarn Y in the unwinding-in-progress package and the remaining weight (WF) of the yarn Y in the reserve package at a given time T in each of the spindles 9.

The individual remaining time when the information management unit 110 acquires the node information indicating the presence of a node K, i.e., the total of the remaining time until the unwinding of the yarn Y from the unwinding-in-progress package is completed and the remaining time until the unwinding of the yarn Y from the reserve package is completed is calculated by the Equation 4 below.

$$(Wr+WF)/(A \times Vu \times F) \quad (Equation\ 4)$$

The individual remaining time when the node information acquired by the information management unit 110 indicates the absence of a node K, i.e., the remaining time until unwinding of the yarn Y in the unwinding-in-progress package is completed is calculated by the Equation 5 below.

$$Wr/(A \times Vu \times F) \quad (Equation\ 5)$$

After tR that is the remaining time until unwinding of the yarn Y in the unwinding-in-progress package is completed is calculated by the Equation 6 below, the information management unit 110 may calculate the remaining amount of the yarn Y in the unwinding-in-progress package by utilizing the information of the remaining time.

$$tR=\{WF-(A \times Vu \times F \times tinU)\}/(A \times Vu \times F) \quad (Equation\ 6)$$

14

(Explanation of Remaining Amount List Information and Remaining Time List Information)

Subsequent to the above, the remaining amount list information and the remaining time list information output by the information management unit 110 will be described. In the present embodiment, the information management unit 110 causes the machine output unit 5b to output the remaining amount list information in which plural sets of the individual remaining amount information of the respective spindles 9 are listed. Furthermore, the information management unit 110 causes the machine output unit 5b to output the remaining time list information in which plural sets of the individual remaining time information of the respective spindles 9 are listed.

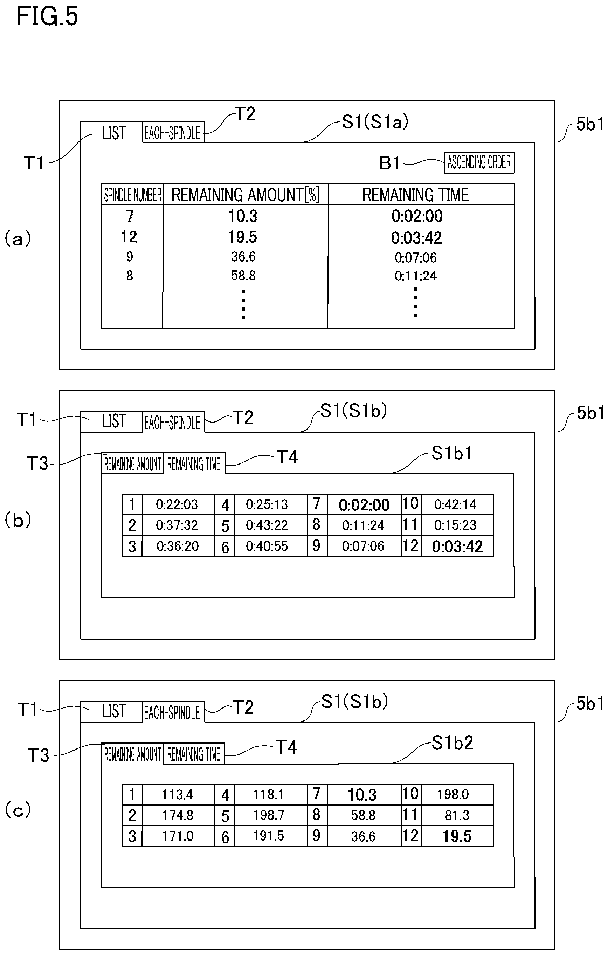

To be more specific, the machine controller 5 causes the display unit 5b1 of the machine output unit 5b to display a list screen S1 shown in FIG. 5(a) to FIG. 5(c). As shown in FIG. 5(a) to FIG. 5(c), the list screen S1 shows a list tab T1 and an each-spindle tab T2. When the operator selects the list tab T1 by using the machine input unit 5a, the machine controller 5 displays a first screen S1a shown in FIG. 5(a) on the display unit 5b1. When the operator selects the each-spindle tab T2 by using the machine input unit 5a, the machine controller 5 displays a second screen S1b shown in FIG. 5(b) and FIG. 5(c) on the display unit 5b1.

As shown in FIG. 5(a), the first screen S1a displays either ascending-order remaining amount list information that is remaining amount list information in which plural sets of individual remaining amount information corresponding to the spindles 9 are sorted in an ascending order of the individual remaining amounts or descending-order remaining amount list information that is remaining amount list information in which plural sets of individual remaining amount information corresponding to the spindles 9 are sorted in a descending order of the individual remaining amounts.

The first screen S1a displays an individual remaining time corresponding to each spindle 9, in addition to the sets of individual remaining amount information corresponding to the spindles 9. The first screen S1a displays either ascending-order remaining time list information that is remaining time list information in which plural sets of individual remaining time information corresponding to the spindles 9 are sorted in an ascending order of the individual remaining times or a descending-order remaining time list information that is remaining time list information in which plural sets of individual remaining time information corresponding to the spindles 9 are sorted in a descending order of the individual remaining times. The individual remaining time decreases as the individual remaining amount decreases. On this account, the display order of sets of information regarding the spindles 9 is identical between a case where the sets of information are sorted based on the individual remaining amount and a case where the sets of information are sorted based on the individual remaining time.

The first screen S1a displays a sorting order input button B1 by which an ascending order sorting instruction to sort the sets of individual remaining amount information in a descending order of the individual remaining amounts and a descending order sorting instruction to sort the sets of individual remaining amount information in a descending order of the individual remaining amounts. The ascending order sorting instruction is also an instruction to sort the sets of individual remaining time information in an ascending order of the individual remaining times. The descending order sorting instruction is also an instruction to sort the sets of individual remaining time information in a descending order of the individual remaining times. The sorting order input button B1 is equivalent to a sorting order input unit of the present invention.

In the example shown in FIG. 5(a), the remaining amount list information (remaining time list information) displayed on the first screen S1a is ascending-order remaining amount list information (ascending-order remaining time list information) in which plural sets of individual remaining amount information are sorted in an ascending order of the individual remaining amounts. The sorting order input button B1 shows "Ascending Order". As the operator presses the sorting order input button B1 in this state through the machine input unit 5a, the descending order sorting instruction is input. When the descending order sorting instruction is input, the remaining amount list information (remaining time list information) displayed on the first screen S1a is switched to the descending-order remaining amount list information (descending-order remaining time list information) in which plural sets of individual remaining amount information are sorted in a descending order of the individual remaining amounts. After the switch, the sorting order input button B1 shows "Descending Order". As the operator presses the sorting order input button B1 in this state through the machine input unit 5a, the ascending order sorting instruction is input and the displayed screen returns to the first screen S1a shown in FIG. 5(a). To put it differently, each time the operator presses the sorting order input button B1, the remaining amount list information (remaining time list information) displayed on the first screen S1a is switched between the ascending-order remaining amount list information (ascending-order remaining time list information) and the descending-order remaining amount list information (descending-order remaining time list information).

As shown in FIG. 5(a), the first screen S1a displays a number (spindle number) by which each of the spindles 9 is identified, individual remaining amount information (remaining amount) corresponding to each spindle 9, and individual remaining time information (remaining time) corresponding to each spindle 9. Among the sets of information of the spindles 9 displayed on the first screen S1a, a set of information of a spindle 9 where the individual remaining amount is equal to or smaller than a predetermined amount Q is highlighted. In the example shown in FIG. 5(a), the individual remaining amount information indicating that the individual remaining amount is equal to or smaller than 20 % and the spindle number and the remaining time corresponding to this information are highlighted. The predetermined amount Q that is a threshold for determining whether to highlight the information of a spindle 9 can be set by the operator through the machine input unit 5a. The predetermined amount Q is an amount smaller than the amount of the yarn Y wound on one yarn supply package Ps and is set by the operator. Whether to highlight the information of a spindle 9 may be determined with reference to the individual remaining time. That is to say, the information of a spindle 9 in which the individual remaining time is equal to a predetermined length L (e.g., 5 minutes or shorter) may be highlighted. In the present embodiment, the predetermined length L is an individual remaining time when the individual remaining amount is the predetermined amount Q. In the example shown in FIG. 5(a), a text representing the information of a spindle 9 where the individual remaining amount is equal to or smaller than the predetermined amount Q is highlighted as a text that is thicker and larger than the texts representing information of other spindles 9.

The way of highlighting information is not limited to this. For example, the information of a spindle 9 to be highlighted may be arranged to be different in color from the information of the other spindles 9. For example, the information of the spindle 9 to be highlighted is displayed in red, whereas the information of the other spindles 9 is displayed in black. As another way of highlighting information, the information of a spindle 9 to be highlighted may be arranged to flicker. As a further way of highlighting information, the background of an area where the information of a spindle 9 to be highlighted is displayed may be arranged to be different in color from the background of an area where the information of the other spindles 9 is displayed. The highlight may be achieved by a combination of at least two of the above-described methods.

While in the example shown in FIG. 5(a) the individual remaining amount information and the individual remaining time information are represented by texts, the way of representing these sets of information is not limited to this. For example, the individual remaining amount information and the individual remaining time information may be represented by bar-shaped objects. In this case, each of the individual remaining amount and the individual remaining time is represented by the length of a bar.

As shown in FIG. 5(b) and FIG. 5(c), the second screen S1b displays a remaining amount tab T3 and a remaining time tab T4. When the operator selects the remaining time tab T4 by using the machine input unit 5a, the machine controller 5 displays a remaining time list screen S1b1 shown in FIG. 5(b) on the display unit 5b1. The remaining time list screen S1b1 shows, as the remaining time list information, sets of individual remaining time information of the respective spindles 9, which are sorted to correspond to the arrangement of the yarn supply package retaining portions 20 of the respective spindles 9. That is to say, in the remaining time list screen S1b1, sets of individual remaining time information of the respective spindles 9 are arranged to form a 3 x 4 matrix in accordance with the yarn supply package retaining portions 20 forming four columns and three rows in each span. In the example shown in FIG. 5(b), sets of individual remaining time information corresponding to 12 spindles of one span are displayed.

In the remaining time list screen S1b1, the information of a spindle 9 where the individual remaining time is equal to or shorter than the predetermined length L is highlighted. In the example shown in FIG. 5(b), a text representing the information of a spindle 9 where the individual remaining time is equal to or shorter than the predetermined length L is highlighted as a text that is thicker and larger than texts representing information of other spindles 9.

When the operator selects the remaining amount tab T3 through the machine input unit 5a, a remaining amount list screen S1b2 shown in FIG. 5(c) is displayed on the display unit 5b1. The remaining amount list screen S1b2 on the display unit 5b1 shows, as the remaining amount list information, the remaining amounts of the respective spindles 9, which are sorted to correspond to the arrangement of the yarn supply package retaining portions 20 of the respective spindles 9. In other words, on the remaining amount list screen S1b2, the remaining amounts of the respective spindles 9 are arranged to form a 3 x 4 matrix in the same manner as in the remaining time list screen S1b1.

In the remaining amount list screen S1b2, the information of a spindle 9 where the individual remaining amount is equal to or shorter than the predetermined amount Q is highlighted. In the example shown in FIG. 5(c), a text representing the information of a spindle 9 where the individual remaining amount is equal to or smaller than a predetermined amount Q is highlighted as a text that is thicker and larger than texts representing information of other spindles 9. The way of highlighting information on the second screen S1b is not limited to those shown in FIG. 5(b) and FIG. 5(c), in the same manner as the highlighting in the first screen S1a.

The machine controller 5 causes the sound output unit 5b2 to output the remaining amount list information and the remaining time list information. In the present embodiment, when the display unit 5b1 displays the first screen S1a and the ascending order sorting instruction is input through the sorting order input button B1, the machine controller 5 causes the sound output unit 5b2 to output ascending-order remaining amount list information in which sets of individual remaining amount information are sorted in an ascending order of the individual remaining amounts Moreover, when the display unit 5b1 displays the first screen S1a and the descending order sorting instruction is input through the sorting order input button B1, the machine controller 5 causes the sound output unit 5b2 to output descending-order remaining amount list information in which sets of individual remaining amount information are sorted in a descending order of the individual remaining amounts. When the display unit 5b1 displays the first screen S1a, the remaining time list information may be output by the sound output unit 5b2 in place of the remaining amount list information. Alternatively, both of the remaining amount list information and the remaining time list information may be output by the sound output unit 5b2.

When the display unit 5b1 displays the remaining time list screen S1b1 of the second screen S1b, the machine controller 5 causes the sound output unit 5b2 to output the remaining time list information in which sets of individual remaining time information are sorted in the order of spindle numbers. In so doing, the sets of individual remaining time information are output in order such that a set of individual remaining time information corresponding to a spindle 9 with a spindle number 1 is output first. When the display unit 5b1 displays the remaining amount list screen S1b2 of the second screen S1b, the machine controller 5 causes the sound output unit 5b2 to output the remaining amount list information in which sets of individual remaining amount information are sorted in the order of spindle numbers. In so doing, the sets of individual remaining amount information are output in order such that a set of individual remaining amount information corresponding to a spindle 9 with a spindle number 1 is output first.

When the remaining amount list information is output by the sound output unit 5b2, the machine controller 5 causes the unit to output each individual remaining amount together with the spindle number corresponding to the each individual remaining amount. When the remaining time list information is output by the sound output unit 5b2, the machine controller 5 causes the unit to output each individual remaining time together with the spindle number corresponding to the each individual remaining time.

When the remaining amount list information is output by the sound output unit 5b2, the machine controller 5 highlights the information of a spindle 9 where the individual remaining amount is equal to or smaller than the predetermined amount Q. When the remaining time list information is output by the sound output unit 5b2, the machine controller 5 highlights the information of a spindle 9 where the individual remaining time is equal to or shorter than the predetermined length L. For example, the machine controller 5 controls the sound output unit 5b2 such that sound indicating information that should be highlighted is larger than sound indicating other types of information. Alternatively, for example, the machine controller 5 controls the sound output unit 5b2 such that sound indicating information that should be highlighted is different in pitch from sound indicating other types of information.

In the present embodiment, the information displayed on the display unit 5b1 (i.e., the remaining amount list information and the remaining time list information) corresponds to the information output by the sound output unit 5b2 (i.e., the remaining amount list information and the remaining time list information). The disclosure, however, is not limited to this arrangement. For example, the sound output unit 5b2 may always output the ascending-order remaining amount list information irrespective of the information displayed on the display unit 5b1. In this case, even if the descending-order remaining amount list information is displayed on the display unit 5b1, the sound output unit 5b2 outputs the ascending-order remaining amount list information. Furthermore, for example, when the display unit 5b1 shows the remaining amount list screen S1b2 (screen in which the remaining amounts of the respective spindles 9, which are sorted to correspond to the arrangement of the yarn supply package retaining portions 20), the sound output unit 5b2 may output the ascending-order remaining amount list information.

In the present embodiment, the information output by the sound output unit 5b2 is switched between the ascending-order remaining amount list information (ascending-order remaining time list information) and the descending-order remaining amount list information (descending-order remaining time list information) by means of the sorting order input button B1 in the first screen S1a displayed on the display unit 5b1. The disclosure, however, is not limited to this arrangement. Furthermore, in the present embodiment, the information output by the sound output unit 5b2 is switched between the remaining amount list information and the remaining time list information by means of the remaining amount tab T3 and the remaining time tab T4 in the second screen S1b displayed on the display unit 5b1. The disclosure, however, is not limited to this arrangement. An operation unit by which the information output from the sound output unit 5b2 is switched may be provided to be independent from an operation unit by which the information output from the display unit 5b1 is switched. In this case, the operation unit by which the information output from the sound output unit 5b2 is switched may be a button displayed on the display unit 5b1. Alternatively, the operation unit may be a physical button.

The machine controller 5 may not output the remaining amount list information and the remaining time list information to the sound output unit 5b2 and may output the remaining amount list information and the remaining time list information to the display unit 5b1. The machine controller 5 may not output the remaining amount list information and the remaining time list information to the display unit 5b1 and may output the remaining amount list information and the remaining time list information to the sound output unit 5b2.

(Control Flow)

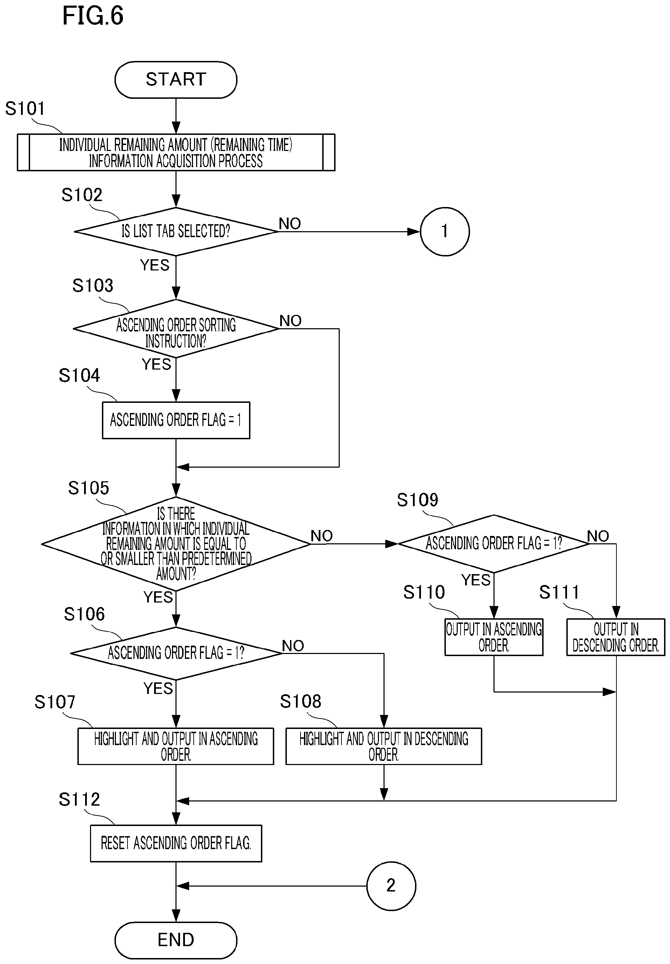

Subsequent to the above, the following will describe an example of the steps of an output process of outputting the remaining amount list information and the remaining time list information, with reference to the flowcharts in FIG. 6 to FIG. 8. The following assumes that, in the information management unit 110, the machine controller 5 provided in each false-twist texturing machine 1 performs the process described below. However, the disclosure is not limited to this. Another device constituting the information management unit 110 may perform the process described below. The process is continuously performed while the yarn processing facility 100 is in action. While the yarn processing facility 100 is in action, the machine controller 5 causes the machine output unit 5b to continuously display the list screen S1 shown in FIG. 5(a) to FIG. 5(c).

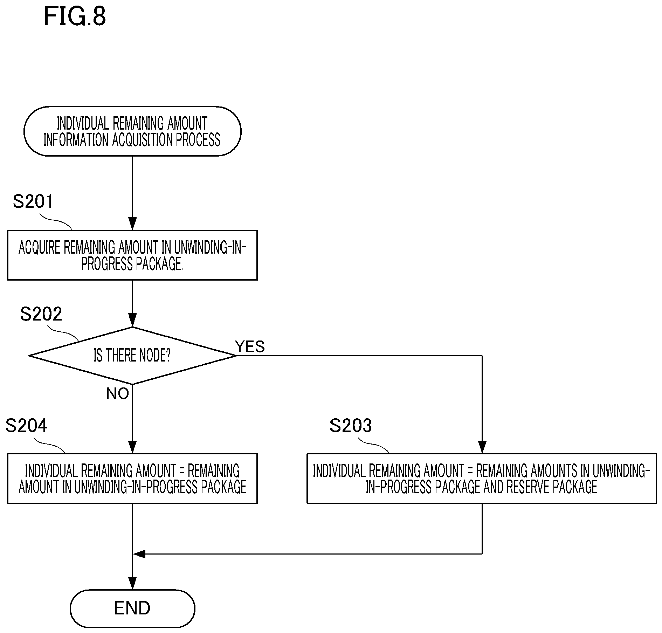

To begin with, as shown in FIG. 6, for each of the spindles 9 in the false-twist texturing machine 1 controlled by the machine controller 5, the machine controller 5 acquires the individual remaining amount information and the individual remaining time information at a given time T (S101: a, individual remaining amount information acquisition process and an individual remaining time information acquisition process). That is to say, in this step, the machine controller 5 acquires the remaining amount (individual remaining amount) of the yarn Y in one or two yarn supply package Ps attached to the yarn supply package retaining portion 20 of each spindle 9 at the given time T. Furthermore, the machine controller 5 acquires a remaining time (individual remaining time) until the yarn Y included in one or two yarn supply package Ps attached to the yarn supply package retaining portion 20 of each spindle 9 at the given time T is completely unwound. The individual remaining amount information acquisition process and the individual remaining time information acquisition process will be detailed later (see FIG. 8).

Thereafter, the machine controller 5 determines whether the list tab T1 of the list screen S1 displayed on the machine output unit 5b is selected by the operator (S102). When the list tab T1 is selected (YES in S102), the machine controller 5 determines whether the ascending order sorting instruction has been input by the operator by means of the sorting order input button B1 in the first screen S1a displayed on the machine output unit 5b (S103) . To put it differently, it is determined whether or not the latest instruction input by the sorting order input button B1 at the given time T is the ascending order sorting instruction.

When the ascending order sorting instruction is input (YES in S103), the machine controller 5 sets an ascending order flag at "1" (S104). Thereafter, the machine controller 5 determines whether there is a set of individual remaining amount information in which the individual remaining amount is equal to or smaller than the predetermined amount Q, among sets of individual remaining amount information acquired in S101 (S105) . On the other hand, when it is determined that the ascending order sorting instruction is not input, i.e., the descending order sorting instruction is input (NO in S103), the above-described S104 is omitted and the process proceeds to S105.

If it is determined in S105 that there is a set of individual remaining amount information in which the individual remaining amount is equal to or smaller than the predetermined amount Q (YES in S105), the machine controller 5 determines whether the ascending order flag is set at "1" (S106). When the ascending order flag is set at "1" (YES in S106), the machine controller 5 arranges the sets of individual remaining amount information and individual remaining time information acquired in S101 in an ascending order, and causes the machine output unit 5b to output the remaining amount list information and remaining time list information in which the information (a spindle number, a remaining amount (individual remaining amount information) and a remaining time (individual remaining time information)) of a spindle 9 in which the individual remaining amount is equal to or smaller than the predetermined amount Q is highlighted (S107: output process) . The process then proceeds to S112. When the ascending order flag is not set at "1" (NO in S106), the machine controller 5 arranges the sets of individual remaining amount information and individual remaining time information acquired in S101 in a descending order, and causes the machine output unit 5b to output the remaining amount list information and remaining time list information in which the information (a spindle number, a remaining amount (individual remaining amount information) and a remaining time (individual remaining time information)) of a spindle 9 in which the individual remaining amount is equal to or smaller than the predetermined amount Q is highlighted (S108: output process). The process then proceeds to S112.

On the other hand, if it is determined that there is no set of the individual remaining amount information in which the individual remaining amount is equal to or smaller than the predetermined amount Q (NO in S105), the machine controller 5 determines whether the ascending order flag is set at "1" (S109). When the ascending order flag is set at "1" (YES in S109), the machine controller 5 causes the machine output unit 5b to output the remaining amount list information and the remaining time list information in which the sets of individual remaining amount information and the sets of individual remaining time information acquired in S101 are sorted in an ascending order (S110: output process). The process then proceeds to S112. When the ascending order flag is not set at "1" (NO in S109), the machine controller 5 causes the machine output unit 5b to output the remaining amount list information and the remaining time list information in which the sets of individual remaining amount information and the sets of individual remaining time information acquired in S101 are sorted in a descending order (S111: output process). Subsequently, the machine controller 5 resets the ascending order flag (S112) and terminates the process.

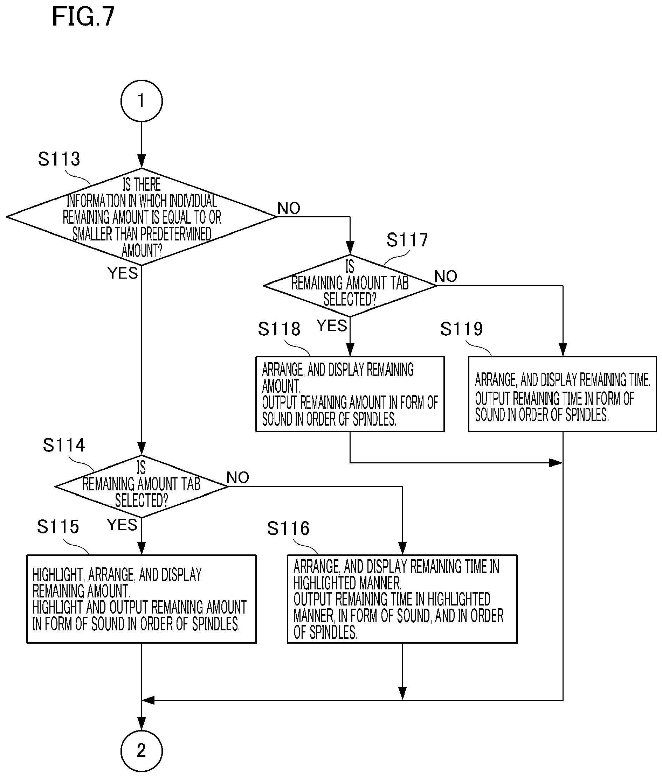

Furthermore, when it is determined in S102 that the list tab T1 is not selected, i.e., the each-spindle tab T2 is selected (NO in S102), as shown in FIG. 7, the machine controller 5 determines whether there is a set of individual remaining amount information in which the individual remaining amount is equal to or smaller than the predetermined amount Q (a set of the individual remaining time information in which the individual remaining time is equal to or shorter than the predetermined length L) among the sets of individual remaining amount information acquired in S101 (S113).

When there is a set of individual remaining amount information in which the individual remaining amount is equal to or smaller than the predetermined amount Q (a set of the individual remaining time information in which the individual remaining time is equal to or shorter than the predetermined length L) (YES in S113), the machine controller 5 determines whether the remaining amount tab T3 of the second screen S1b displayed on the machine output unit 5b is selected by the operator (S114). When the remaining amount tab T3 is selected (YES in S114), the machine controller 5 provides the sets of individual remaining amount information acquired in S101 to be sorted in accordance with the arrangement of the yarn supply package retaining portions 20, and causes the display unit 5b1 of the machine output unit 5b to display the remaining amount list information in which the remaining amount (individual remaining amount information) of a spindle 9 where the individual remaining amount is equal to or smaller than the predetermined amount Q is highlighted (S115: output process). At this stage, the machine controller 5 sorts the sets of individual remaining amount information acquired in S101 in the order of spindle numbers (i.e., in an ascending order), and causes the sound output unit 5b2 of the machine output unit 5b to output the remaining amount list information in which the information (a spindle number, a remaining amount (individual remaining amount information) of a spindle 9 in which the individual remaining amount is equal to or smaller than the predetermined amount Q is highlighted (S115: output process). The process is then terminated.

On the other hand, when the remaining amount tab T3 is not selected, i.e., when the remaining time tab T4 is selected (YES in S114), the machine controller 5 provides the sets of individual remaining time information acquired in S101 to be sorted in accordance with the arrangement of the yarn supply package retaining portions 20, and causes the display unit 5b1 of the machine output unit 5b to display the remaining time list information in which the remaining time of a spindle 9 where the individual remaining time is equal to or shorter than the predetermined length L is highlighted (S116: output process). At this stage, the machine controller 5 sorts the sets of individual remaining time information acquired in S101 in the order of spindle numbers (i.e., in an ascending order), and causes the sound output unit 5b2 of the machine output unit 5b to output the remaining time list information in which the information (a spindle number and a remaining time (individual remaining time information)) of a spindle 9 in which the individual remaining time is equal to or shorter than the predetermined length L is highlighted (S116: output process). The process is then terminated.

When it is determined in S113 that there is none of a set of individual remaining amount information in which the individual remaining amount is equal to or smaller than the predetermined amount Q (a set of the individual remaining time information in which the individual remaining time is equal to or shorter than the predetermined length L) (NO in S113), the machine controller 5 determines whether the remaining amount tab T3 of the second screen S1b displayed on the machine output unit 5b is selected by the operator (S117). When the remaining amount tab T3 is selected (YES in S117), the machine controller 5 causes the display unit 5b1 of the machine output unit 5b to display the remaining amount list information in which the sets of individual remaining amount information acquired in S101 are sorted in accordance with the arrangement of the yarn supply package retaining portions 20 (S118: output process). At this stage, the machine controller 5 causes the sound output unit 5b2 of the machine output unit 5b to output the remaining amount list information in which the sets of individual remaining amount information acquired in S101 are sorted in the order of spindle numbers (i.e., in an ascending order) (S118: output process). The process is then terminated. On the other hand, when the remaining amount tab T3 is not selected, i.e., when the remaining time tab T4 is selected (NO in S117), the machine controller 5 causes the display unit 5b1 of the machine output unit 5b to display the remaining time list information in which the sets of individual remaining time information acquired in S101 are sorted in accordance with the arrangement of the yarn supply package retaining portions 20 (S121: output process). At this stage, the machine controller 5 causes the sound output unit 5b2 of the machine output unit 5b to output the remaining time list information in which the sets of individual remaining time information acquired in S101 are sorted in the order of spindle numbers (i.e., in an ascending order) (S121: output process). The process is then terminated.

The following will describe an example of the steps of the above-described individual remaining amount information acquisition process. This process is executed at each of the spindles 9. To begin with, as shown in FIG. 8, the remaining weight of the yarn Y in an unwinding-in-progress package at a given time T is acquired based on, for example, the above-described Equation 1 (S201). Thereafter, the machine controller 5 acquires node information stored in the machine storage unit 5c (node information acquisition process) and determines whether a node K exists (S202). To be more specific, whether the node information indicating the presence of a node K is stored in the machine storage unit 5c is determined.

When there is a node K (YES in S202), the ratio of the remaining weight of the yarn Y calculated by the above-described Equation 2 is acquired as individual remaining amount information (S203) and the process is terminated. To be more specific, the sum total of the ratio of the remaining weight of the yarn Y in the unwinding-in-progress package at the given time T acquired in S201 and the ratio (100 %) of the remaining weight of the yarn Y in the reserve package is acquired as the individual remaining amount information. On the other hand, when there is no node K (NO in S202), the ratio of the remaining weight of the yarn Y calculated by the above-described Equation 3 is acquired as individual remaining amount information (S204) and the process is terminated. To be more specific, the ratio of the remaining weight of the yarn Y in the unwinding-in-progress package at the given time T acquired in S201 is acquired as the individual remaining amount information.

As an example of the steps of the individual remaining time information acquisition process, to begin with, the steps S201 and S202 of the above-described individual remaining amount information acquisition process are executed.

Thereafter, when it is determined that there is a node K in S202, the remaining time until the unwinding of the yarn Y is completed, which is calculated by the above-described Equation 4, is acquired as the individual remaining time information, and then the process is terminated. When it is determined that there is no node K in S202, the remaining time until the unwinding of the yarn Y is completed, which is calculated by the above-described Equation 5, is acquired as the individual remaining time information, and then the process is terminated.

(Characteristics of First Embodiment)

As described above, in the yarn processing facility 100 of the present embodiment, the false-twist texturing machine 1 includes, for each of the spindles 9, the yarn supply package retaining portion 20 which allows two yarn supply packages Ps that are the unwinding-in-progress package and the reserve package to be attachable and detachable and the yarn Y can be uninterruptedly supplied when a terminal portion of the yarn Y in the unwinding-in-progress package is joined with a start portion of the yarn Y in the reserve package. The information management unit 110 configured to be able to manage information regarding the false-twist texturing machine 1 is able to acquire node information that is information regarding the presence/absence of the node K of the terminal portion of the yarn Y in the unwinding-in-progress package and the start portion of the yarn Y of the reserve package. The information management unit 110 performs: an individual remaining amount information acquisition process of acquiring, for each of the spindles 9, individual remaining amount information that is information related to the individual remaining amount that is the remaining amount of the yarn Y in the yarn supply package Ps attached to the yarn supply package retaining portion 20; and an output process of outputting, to the machine output unit 5b, the remaining amount list information in which sets of individual remaining amount information acquired for the respective spindles 9 in the individual remaining amount information acquisition process are listed. If the node information indicating the presence of a node K is acquired in the individual remaining amount information acquisition process, the information management unit 110 acquires, as the individual remaining amount information, the total of the remaining amount of the yarn Y in the unwinding-in-progress package and the remaining amount of the yarn Y in the reserve package. If the node information indicating the presence of a node K is not acquired in the individual remaining amount information acquisition process, the information management unit 110 acquires the remaining amount of the yarn Y in the unwinding-in-progress package as the individual remaining amount information.

With the arrangement above, the remaining amount list information in which plural sets of the individual remaining amount information of the respective spindles 9 are listed is output to the machine output unit 5b in the output process. The operator is therefore able to easily grasp the timing to prepare a new yarn supply package Ps for each of the spindles 9, based on the remaining amount list information. On this account, decrease in production efficiency of the yarn Y is suppressed by avoiding interruption of supply of the yarn Y.

In addition to the above, in the yarn processing facility 100 of the embodiment above, the information management unit 110 performs: an individual remaining time information acquisition process of acquiring, for each of the spindles 9, individual remaining time information that is information related to the individual remaining time that is the remaining time until the yarn Y in the yarn supply package Ps attached to the yarn supply package retaining portion 20 is completely unwound; and an output process of outputting, to the machine output unit 5b, the remaining time list information in which sets of individual remaining time information acquired for the respective spindles 9 in the individual remaining time information acquisition process are listed. If the node information indicating the presence of a node K is acquired in the individual remaining time information acquisition process, the information management unit 110 acquires, as the individual remaining time information, the total of the remaining time until the yarn Y in the unwinding-in-progress package is completely unwound and the remaining time until the yarn Y in the reserve package is completely unwound. If the node information indicating the presence of a node K is not acquired in the individual remaining time information acquisition process, the information management unit 110 acquires the remaining time until the yarn Y in the unwinding-in-progress package is completely unwound as the individual remaining time information.

With the arrangement above, the remaining time list information in which plural sets of the individual remaining time information of the respective spindles 9 are listed is output to the machine output unit 5b in the output process. The operator is therefore able to easily grasp the timing to prepare a new yarn supply package Ps for each of the spindles 9, based on the remaining time list information. On this account, decrease in production efficiency of the yarn Y is suppressed by avoiding interruption of supply of the yarn Y.

In addition to the above, in the yarn processing facility 100 of the embodiment above, in the output process, the information management unit 110 causes the machine output unit 5b to output the remaining amount list information. In the remaining amount list information, a spindle number by which each of the spindles 9 is identified and individual remaining amount information corresponding to that spindle 9 are associated with each other. The operator is therefore able to easily grasp to which spindle 9 each set of the individual remaining amount information in the remaining amount list information belongs, based on the spindle number.

Furthermore, in the yarn processing facility 100 of the embodiment above, in the output process, the information management unit 110 causes the output unit 5b to output the remaining time list information. In the remaining time list information, a spindle number by which each of the spindles 9 is identified and individual remaining time information corresponding to that spindle 9 are associated with each other. The operator is therefore able to easily grasp to which spindle 9 each set of the individual remaining time information in the remaining time list information belongs, based on the spindle number.

In addition to the above, in the yarn processing facility 100 of the embodiment above, in the output process, the information management unit 110 causes the machine output unit 5b to output ascending-order remaining amount list information (ascending-order remaining time list information) and descending-order remaining amount list information (descending-order remaining time list information). In the ascending-order remaining amount list information (ascending-order remaining time list information), individual remaining amounts (individual remaining times) corresponding to the respective spindles 9 are sorted in an ascending order. In the descending-order remaining amount list information (descending-order remaining time list information), individual remaining amounts (individual remaining times) corresponding to the respective spindles 9 are sorted in a descending order. With this arrangement, in the output process, sets of individual remaining amount information (individual remaining time information) are sorted in the ascending order or descending order of the individual remaining amounts (individual remaining times). The operator is therefore able to further easily grasp the timing to prepare a new yarn supply package Ps for each of the spindles 9. It is therefore possible to further avoid the interruption of the supply of the yarn Y.

In addition to the above, the yarn processing facility 100 of the embodiment above is provided with the sorting order input button B1 by which the ascending order sorting instruction to sort the sets of individual remaining amount information (individual remaining time information) in the ascending order of the individual remaining amounts (individual remaining times) and the descending order sorting instruction to sort the sets of individual remaining amount information (individual remaining time information) in the descending order of the individual remaining amounts (individual remaining times). In the output process, when the ascending order sorting instruction is input through the sorting order input button B1, the information management unit 110 causes the machine output unit 5b to output the ascending-order remaining amount list information (ascending-order remaining time list information), and when the descending order sorting instruction is input through the sorting order input button B1, the information management unit 110 causes the machine output unit 5b to output the descending-order remaining amount list information (descending-order remaining time list information). It is therefore possible to switch the sorting order of the sets of individual remaining amount information (individual remaining time information) between the ascending order and the descending order by operating the sorting order input button B1.

In addition to the above, in the yarn processing facility 100 of the embodiment above, the machine output unit 5b includes the display unit 5b1 which is configured to be able to display information. The operator is therefore able to easily grasp the timing to prepare a new yarn supply package Ps for each of the spindles 9, based on the remaining amount list information (remaining time list information) displayed on the display unit 5b1.

In addition to the above, in the yarn processing facility 100 of the embodiment above, the machine output unit 5b includes the sound output unit 5b2 which is configured to be able to output information in the form of sound. The operator is therefore able to easily grasp the timing to prepare a new yarn supply package Ps for each of the spindles 9, based on the remaining amount list information (remaining time list information) output from the sound output unit 5b2 in the form of sound.

In addition to the above, in the yarn processing facility 100 of the embodiment above, in the output process, the information management unit 110 causes the machine output unit 5b to display the sets of individual remaining amount information (individual remaining time information) in the remaining amount list information (remaining time list information) in an arrangement corresponding to the arrangement of the yarn supply package retaining portions 20 of the respective spindles 9. On this account, based on the arrangement of the sets of individual remaining amount information (individual remaining time information) displayed on the machine output unit 5b, the operator is able to easily grasp to which spindle 9 each set of individual remaining amount information (individual remaining time information) in the remaining amount list information (remaining time list information) belongs.

In addition to the above, in the yarn processing facility 100 of the embodiment above, in the output process, the information management unit 110 highlights a set of individual remaining amount information (individual remaining time information) in which the individual remaining amount (individual remaining time) is not larger than the predetermined amount Q (not longer than the predetermined length L) among the sets of individual remaining amount information (individual remaining time information) corresponding to the respective spindles 9, when the sets of individual remaining amount information (individual remaining time information) is output. The operator is therefore able to further easily grasp a spindle 9 for which a new yarn supply package Ps must be prepared soon. It is therefore possible to further reliably avoid the interruption of the supply of the yarn Y.

In addition to the above, in the yarn processing facility 100 of the embodiment above, the information management unit 110 includes the machine storage unit 5c configured to be able to store information regarding the false-twist texturing machine 1 and the machine input unit 5a configured to allow an input of node information indicating the presence of a node K. The information management unit 110 then executes the node information storage process of storing the node information input from the machine input unit 5a in the machine storage unit 5c and the node information acquisition process of acquiring the node information stored in the machine storage unit 5c. It is therefore unnecessary to provide a sensor, etc. for detecting the node K.

Furthermore, in the yarn processing facility 100 of the embodiment above, the false-twist texturing machine 1 has, for each of the spindles 9, the unwound package sensor 24 which is configured to detect from which one of the two yarn supply packages Ps attached to the yarn supply package retaining portion 20 the yarn Y is being unwound. When the unwound package sensor 24 detects that the yarn supply package Ps from which the yarn Y is unwound is switched, the information management unit 110 executes the node information changing process of changing the node information stored in the machine storage unit 5c to the node information indicating the absence of a node K. When the yarn supply package Ps from which the yarn Y is unwound is switched from the unwinding-in-progress package to the reserve package, the node K is supplied to the wound package Pw side. On this account, when the unwound package sensor 24 detects that the yarn supply package switching has occurred, the node information is changed to the node information indicating the absence of a node K, with the result that the presence/absence of the node K is precisely grasped.

<Second Embodiment>

The following will describe a yarn processing facility 100m of Second Embodiment of the present invention. The yarn processing facility 100m of the present embodiment is different from that of First Embodiment in terms of means for acquiring information indicating the presence/absence of a node K. That is to say, the yarn processing facility 100 of First Embodiment includes the machine input unit 5a configured to allow an input of information indicating the presence/absence of a node K by an operator. On the other hand, the yarn processing facility 100m of the present embodiment includes a node sensor 53 which is configured to be able to acquire information indicating the presence/absence of a node K as detailed below. The components having the same structures as those in First Embodiment are given the same reference numerals, and the description thereof will be omitted.

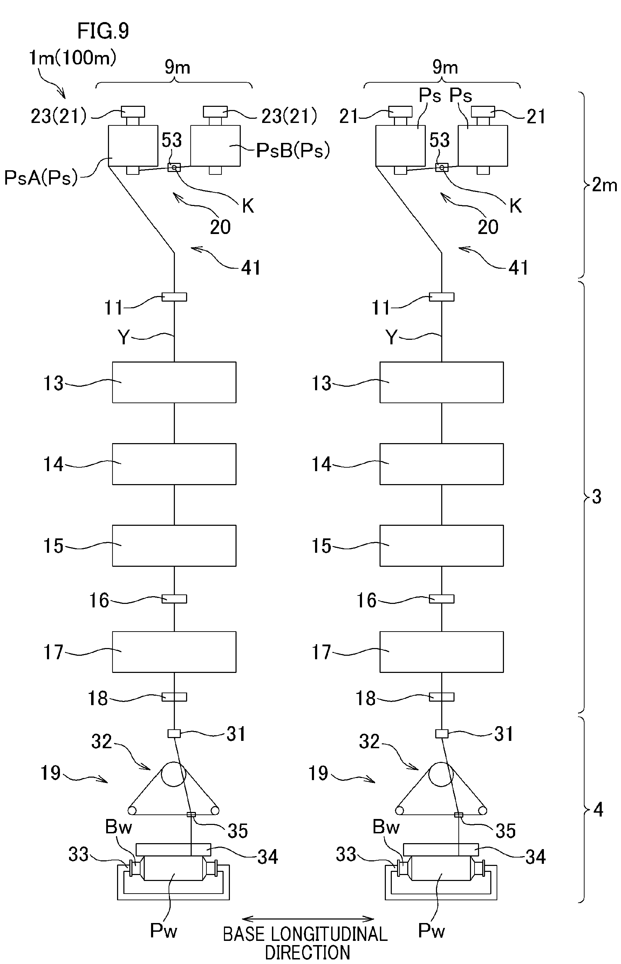

As shown in FIG. 9, in the yarn processing facility 100m of the present embodiment, the node sensor 53 is provided at a yarn supplying unit 2m of a false-twist texturing machine 1m. The node sensor 53 is provided at each spindle 9m. The node sensor 53 is configured to be able to detect a node K that is stationarily provided at a predetermined position.

In the yarn processing facility 100m, when the yarn supply package Ps attached to one of the package attachment units 21 of the yarn supply package retaining portion 20 becomes empty, the operator prepares a new yarn supply package Ps (reserve package) and positions a node K at a predetermined position. As a result, the node sensor 53 detects the node K. When the node sensor 53 detects the node K, the information management unit 110 stores, in the machine storage unit 5c, the node information indicating the presence of the node K (node information storage process).

Thereafter, when the yarn supply package Ps from which the yarn Y is unwound is switched from the unwinding-in-progress package to the reserve package, the node K is supplied to the wound package Pw side. In other words, the node K moves from the predetermined position. As a result, the node K becomes no longer detected by the node sensor 53. When the node K becomes no longer detected by the node sensor 53, the information management unit 110 changes the node information stored in the machine storage unit 5c to the node information indicating the absence of the node K (node information changing process). When the node K becomes no longer detected by the node sensor 53, it is determined that the yarn supply package switching has occurred. Therefore, when the node K becomes no longer detected by the node sensor 53, the machine controller 5 performs the above-described reset process.

(Characteristics of Second Embodiment)

As described above, in the same manner as in First Embodiment described above, the yarn processing facility 100m of the present embodiment makes it possible to suppress decrease in production efficiency of the yarn Y by avoiding interruption of supply of the yarn Y.

In the yarn processing facility 100m of the present embodiment, when the node sensor 53 detects the node K, the node information indicating the presence of the node K is stored in the machine storage unit 5c. Because the operator is not required to input the node information, the operations are simplified.

The embodiments of the present invention are described hereinabove. However, the specific structure of the present invention shall not be interpreted as to be limited to the above described embodiments. The scope of the present invention is defined not by the above embodiments but by claims set forth below, and shall encompass the equivalents in the meaning of the claims and every modification within the scope of the claims.

In the embodiments above, the information management unit 110 executes the individual remaining amount information acquisition process and the individual remaining time information acquisition process. The disclosure, however, is not limited to this arrangement. The information management unit 110 may be able to perform only one of the individual remaining amount information acquisition process and the individual remaining time information acquisition process. When the information management unit 110 is able to execute only the individual remaining amount information acquisition process, only the remaining amount list information is output in the output process. When the information management unit 110 is able to execute only the individual remaining time information acquisition process, only the remaining time list information is output in the output process.

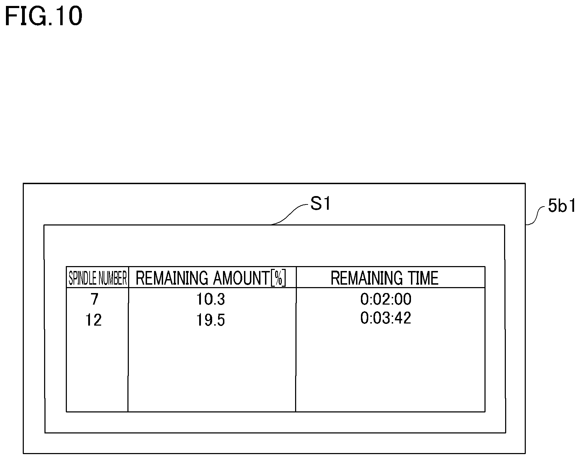

In the embodiments above, in the output process, the remaining amount list information (remaining time list information) in which all sets of individual remaining amount information (individual remaining time information) of the spindles 9 are listed is output. The disclosure, however, is not limited to this arrangement. The remaining amount list information may include at least one of the sets of individual remaining amount information of the spindles 9. The remaining time list information may include at least one of the sets of individual remaining time information of the spindles 9. That is to say, in a list screen S1 of a modification shown in FIG. 10, at lest one set of individual remaining amount information (individual remaining time information) in which the individual remaining amount (individual remaining time) is equal to or smaller than the predetermined amount Q (equal to or shorter than the predetermined length L) is listed among plural sets of individual remaining amount information (individual remaining time information) corresponding to the spindles 9. While in the modification two sets of individual remaining amount information (individual remaining time information) are listed, the disclosure is not limited to this arrangement. The number of the sets of individual remaining amount information (individual remaining time information) listed in the list screen S1 may be three or more. Alternatively, for example, in the list screen S1, a set of individual remaining amount information (individual remaining time information) in which the individual remaining amount (individual remaining time) is the smallest may be listed among plural sets of individual remaining amount information (individual remaining time information) corresponding to the spindles 9. Alternatively, for example, in the list screen S1, a predetermined number of sets of individual remaining amount information (individual remaining time information) may be listed in an ascending order of the individual remaining amounts (individual remaining times), among plural sets of individual remaining amount information (individual remaining time information) corresponding to the spindles 9.

While the embodiments above describe that the remaining amount list information and the remaining time list information are output from the machine output unit 5b of the machine controller 5, the disclosure is not limited to this arrangement. The remaining amount list information and the remaining time list information may be output to a display or a loudspeaker of a terminal (e.g., a mobile terminal such as a tablet terminal) connected to the machine controller 5 over a network such as a LAN or the Internet.

While in the embodiments above the information management unit 110 includes the machine controllers 5 and the management device 101, the disclosure is not limited to this arrangement. The information management unit 110 may include a computer device (not illustrated) that is neither the machine controller 5 nor the management device 101. Alternatively, the information management unit 110 may include only the machine controller 5 or the management device 101.

In the embodiments above, the information management unit 110 stores common initial amount information for all yarn supply packages Ps in advance. However, the disclosure is not limited to these arrangements. The information management unit 110 may store the individual information of a yarn supply package Ps in association with the initial amount information of that yarn supply package Ps. In this case, the initial amounts of the yarn supply packages Ps may be different.

In addition to the above, while the embodiments above describe cases where two yarn supply packages Ps are attachable to and detachable from the yarn supply package retaining portion 20, three or more yarn supply packages Ps may be attachable to and detachable from the yarn supply package retaining portion 20. Also in this case, in the same manner as in the embodiments above, the individual remaining amount information regarding the individual remaining amount that is an amount of the yarn Y uninterruptedly suppliable from the yarn supply package retaining portion 20 at the moment is acquired in the individual remaining amount information acquisition process. The following will specifically describe the case where three or more yarn supply packages Ps are attachable to and detachable from the yarn supply package retaining portion 20. When the acquired node information indicates that there are a node K1 of a terminal portion of the yarn Y in the unwinding-in-progress package and a start portion of the reserve package (first reserve package) from which the yarn Y will be unwound next and a node K2 of a terminal portion of the yarn Y in the first reserve package and a start portion of the yarn Y in the reserve package (second reserve package) from which the yarn Y will be unwound next to the first reserve package, the information management unit 110 acquires, in the individual remaining amount information acquisition process, the total of the remaining amounts of the yarns Y in the unwinding-in-progress package, the first reserve package, and the second reserve package, as the individual remaining amount information.

In the embodiments above, the information management unit 110 is able to output the ascending-order remaining amount list information (ascending-order remaining time list information) and the descending-order remaining amount list information (descending-order remaining time list information) in the output process. The disclosure, however, is not limited to this arrangement. That is to say, the information management unit 110 may cause only the ascending-order remaining amount list information (ascending-order remaining time list information) to be output in the output process. Alternatively, the information management unit 110 may cause only the descending-order remaining amount list information (descending-order remaining time list information) to be output in the output process.

In the embodiments above, the sorting order of the sets of individual remaining amount information (individual remaining time information) is switchable between the ascending order and the descending order by operating the sorting order input button B1. The disclosure, however, is not limited to this arrangement. For example, the sorting order may be switched at predetermined intervals.

In the embodiments above, a set of individual remaining amount information (individual remaining time information) in which the individual remaining amount (individual remaining time) is not larger than the predetermined amount Q (not longer than the predetermined length L) is highlighted and output among the sets of individual remaining amount information (individual remaining time information). In this connection, the set of individual remaining amount information (individual remaining time information) may not be highlighted when output.

In the embodiments above, the operator inputs the node information by using the machine input unit 5a of the machine controller 5. The disclosure, however, is not limited to this arrangement. The operator may input the node information by using a touch pad, a touch panel, or a keyboard of a terminal (e.g., mobile terminal such as a tablet terminal) connected to the machine controller 5 over a network such as a LAN or the Internet, or by using a mouse, etc. connected to the terminal. For example, the node information may be input by using a physical button that is provided on the creel stand 6 for each spindle 9.

While in the embodiments above the yarn processing facility 100 includes plural false-twist texturing machines 1, the disclosure is not limited to this arrangement. The yarn processing facility 100 may include only one false-twist texturing machine 1. In addition to this, the management device 101 may not be provided. In this case, the false-twist texturing machine 1 is equivalent to the yarn processing facility of the present invention.

The present invention may be applied not to the yarn processing facility 100 including the false-twist texturing machine 1 but to another yarn processing facility including a yarn processor. For example, the present invention may be applied to a yarn processing facility including an air texturing machine (yarn processor) recited in Japanese Laid-Open Patent Publication No. 2002-088605.

**Claims**

1. A yarn processing facility (100) comprising:

   a yarn processor (1) which includes processing spindles (9) each of which is able to form a wound package (Pw) by processing a yarn (Y) unwound from a yarn supply package (Ps) and winding the yarn (Y) onto a winding bobbin (Bw); and
   an information management unit (110) which is configured to be able to manage information regarding the yarn processor (1),
   the yarn processor (1) includes, for each of the processing spindles (9), a yarn supply package retaining portion (20) to which yarn supply packages (Ps) including a unwinding-in-progress package (PsA) from which the yarn (Y) is being unwound and a reserve package (PsB) different from the unwinding-in-progress package (PsA) are detachably attached, the yarn supply package retaining portion (20) being capable of uninterruptedly supplying the yarn (Y) when a terminal portion of the yarn (Y) in the unwinding-in-progress package (PsA) is joined with a start portion of the yarn (Y) in the reserve package (PsB),
   the information management unit (110) including:

      an output unit (5b) which is configured to be able to output information regarding the yarn processor (1); and
      a node information acquisition unit (5) which is able to acquire node information that is information regarding presence/absence of a node (K) of the terminal portion of the yarn (Y) in the unwinding-in-progress package (PsA) and the start portion of the yarn (Y) of the reserve package (PsB),
      the information management unit (110) executing: an individual remaining amount information acquisition process of acquiring, for each of the processing spindles (9), a set of individual remaining amount information which is information regarding an individual remaining amount that is a remaining amount of the yarn (Y) in the yarn supply package (Ps) attached to the yarn supply package retaining portion (20); and
      an output process of outputting, to the output unit (5b), remaining amount list information in which sets of the individual remaining amount information of the respective processing spindles (9) acquired in the individual remaining amount information acquisition process, and
      when the individual remaining amount information acquisition process is performed,
      if the node information acquisition unit (5) acquires the node information indicating presence of the node (K), the information management unit (110) acquiring sum total of the remaining amount of the yarn (Y) in the unwinding-in-progress package (PsA) and the remaining amount of the yarn (Y) in the reserve package (PsB), as the individual remaining amount information, and

if the node information acquisition unit (5) does not acquire the node information indicating presence of the node (K), the information management unit (110) acquiring the remaining amount of the yarn (Y) in the unwinding-in-progress package (PsA) as the individual remaining amount information.

2. The yarn processing facility (100) according to claim 1, wherein, in the output process, the information management unit (110) causes the output unit (5b) to output the remaining amount list information in which a number by which each of the processing spindles (9) is specified is associated with a set of the individual remaining amount information corresponding to the each of the processing spindles (9) .

3. The yarn processing facility (100) according to claim 1 or 2, wherein, in the output process, the information management unit (110) causes the output unit (5b) to output either ascending-order remaining amount list information that is the remaining amount list information in which the sets of the individual remaining amount information corresponding to the respective processing spindles (9) are sorted in an ascending order of individual remaining amounts or descending-order remaining amount list information that is the remaining amount list information in which the sets of the individual remaining amount information corresponding to the respective processing spindles (9) are sorted in a descending order of individual remaining amounts.

4. The yarn processing facility (100) according to claim 3, wherein,

the information management unit (110) includes a sorting order input unit (B1) which allows an ascending order sorting instruction of sorting the sets of the individual remaining amount information in the ascending order of the individual remaining amounts or a descending order sorting instruction of sorting the sets of the individual remaining amount information in the descending order of the individual remaining amounts to be input, and

in the output process, the information management unit (110) causes the output unit (5b) to output the ascending-order remaining amount list information when the ascending order sorting instruction is input through the sorting order input unit (B1), and causes the output unit (5b) to output the descending-order remaining amount list information when the descending order sorting instruction is input through the sorting order input unit (B1).

5. The yarn processing facility (100) according to any one of claims 1 to 4, wherein, in the output process, the information management unit (110) causes the output unit (5b) to output the remaining amount list information in which at least one set of the individual remaining amount information in which the individual remaining amount is equal to or smaller than a predetermined amount is listed among the sets of the individual remaining amount information corresponding to the processing spindles (9).

6. The yarn processing facility (100) according to any one of claims 1 to 5, wherein, in the output process, the information management unit (110) causes the output unit (5b) to output at least one set of the individual remaining amount information in which the individual remaining amount is equal to or smaller than a predetermined amount in a highlighted manner, among the sets of the individual remaining amount information corresponding to the processing spindles (9).

7. The yarn processing facility (100) according to any one of claims 1 to 6, wherein,

the output unit (5b) is a display unit (5b1) configured to be able to display information regarding the yarn processor (1), and

in the output process, the information management unit (110) causes the display unit (5b1) to display the remaining amount list information.

8. The yarn processing facility (100) according to claim 7, wherein, in the output process, the information management unit (110) displays the sets of the individual remaining amount information in the remaining amount list information on the display unit (5b1) in an arrangement corresponding to an arrangement of the yarn supply package retaining portions (20) of the respective processing spindles (9).

9. The yarn processing facility (100) according to any one of claims 1 to 6, wherein,

the output unit (5b) is a sound output unit (5b2) configured to be able to output information regarding the yarn processor (1) in the form of sound, and
in the output process, the information management unit (110) causes the sound output unit (5b2) to output the remaining amount list information in the form of sound.

10. A yarn processing facility (100) comprising:

a yarn processor (1) which includes processing spindles (9) each of which is able to form a wound package (Pw) by processing a yarn (Y) unwound from a yarn supply package (Ps) and winding the yarn (Y) onto a winding bobbin (Bw); and
an information management unit (110) which is configured to be able to manage information regarding the yarn processor (1),
the yarn processor (1) includes, for each of the processing spindles (9), a yarn supply package retaining portion (20) to which yarn supply packages (Ps) including a unwinding-in-progress package (PsA) from which the yarn (Y) is being unwound and a reserve package (PsB) different from the unwinding-in-progress package (PsA) are detachably attached, the yarn supply package retaining portion (20) being capable of uninterruptedly supplying the yarn (Y) when a terminal portion of the yarn (Y) in the unwinding-in-progress package (PsA) is joined with a start portion of the yarn (Y) in the reserve package (PsB),
the information management unit (110) including:

an output unit (5b) which is configured to be able to output information regarding the yarn processor (1); and
a node information acquisition unit (5) which is able to acquire node information that is information regarding presence/absence of a node (K) of the terminal portion of the yarn (Y) in the unwinding-in-progress package (PsA) and the start portion of the yarn (Y) of the reserve package (PsB),
the information management unit (110) executing: an individual remaining time information acquisition process of acquiring, for each of the processing spindles (9), a set of individual remaining time information which is information regarding an individual remaining time until the yarn (Y) in the yarn supply package (Ps) attached to the yarn supply package retaining portion (20) is completely unwound; and
an output process of outputting, to the output unit (5b), remaining time list information in which sets of the individual remaining time information of the respective processing spindles (9) acquired in the individual remaining time information acquisition process, and
when the individual remaining time information acquisition process is performed,
if the node information acquisition unit (5) acquires the node information indicating presence of the node (K), the information management unit (110) acquiring sum total of the remaining time until the yarn (Y) in the unwinding-in-progress package (PsA) is completely unwound and the remaining time until the yarn (Y) in the reserve package (PsB) is completely unwound, as the individual remaining time information, and
if the node information acquisition unit (5) does not acquire the node information indicating presence of the node (K), the information management unit (110) acquiring the remaining time until the yarn (Y) in the unwinding-in-progress package (PsA) is completely unwound as the individual remaining time information.

11. The yarn processing facility (100) according to claim 10, wherein, in the output process, the information management unit (110)causes the output unit (5b) to output the remaining time list information in which a number by which each of the processing spindles (9) is specified is associated with a set of the individual remaining time information corresponding to the each of the processing spindles (9).

12. The yarn processing facility (100) according to claim 10 or 11, wherein, in the output process, the information management unit (110) causes the output unit (5b) to output either ascending-order remaining time list information that is the remaining time list information in which the sets of the individual remaining time information corresponding to the respective processing spindles (9) are sorted in an ascending order of individual remaining times or descending- order remaining time list information that is the remaining amount list information in which the sets of the individual remaining time information corresponding to the respective processing spindles (9) are sorted in a descending order of individual remaining times.

13. The yarn processing facility (100) according to claim 12, wherein,

the information management unit (110) includes a sorting order input unit (B1) which allows an ascending order sorting instruction of sorting the sets of the individual remaining time information in the ascending order of the individual remaining times or a descending order sorting instruction of sorting the sets of the individual remaining time information in the descending order of the individual remaining times to be input, and

in the output process, the information management unit (110) causes the output unit (5b) to output the ascending-order remaining time list information when the ascending order sorting instruction is input through the sorting order input unit (B1), and causes the output unit (5b) to output the descending-order remaining time list information when the descending order sorting instruction is input through the sorting order input unit (B1).

**14.** The yarn processing facility (100) according to any one of claims 10 to 13, wherein, in the output process, the information management unit (110) causes the output unit (5b)to output the remaining time list information in which at least one set of the individual remaining time information in which the individual remaining time is equal to or shorter than a predetermined time is listed among the sets of the individual remaining time information corresponding to the processing spindles (9).

**15.** The yarn processing facility (100) according to any one of claims 10 to 14, wherein, in the output process, the information management unit (110) causes the output unit (5b) to output at least one set of the individual remaining time information in which the individual remaining time is equal to or shorter than the predetermined time in a highlighted manner, among the sets of the individual remaining time information corresponding to the processing spindles (9).

**16.** The yarn processing facility (100) according to any one of claims 10 to 15, wherein,

the output unit (5b) is a display unit (5b1) configured to be able to display information regarding the yarn processor (1), and
in the output process, the information management unit (110) causes the display unit (5b1) to display the remaining time list information.

**17.** The yarn processing facility (100) according to claim 16, wherein, in the output process, the information management unit (110) displays the sets of the individual remaining time information in the remaining time list information on the display unit (5b1) in an arrangement corresponding to an arrangement of the yarn supply package retaining portions (20) of the respective processing spindles (9).

**18.** The yarn processing facility (100) according to any one of claims 10 to 15, wherein,

the output unit (5b) is a sound output unit (5b2) configured to be able to output information regarding the yarn processor (1) in the form of sound, and
in the output process, the information management unit (110) causes the sound output unit (5b2) to output the remaining time list information in the form of sound.

**19.** The yarn processing facility (100) according to any one of claims 1 to 18, wherein,
the information management unit (110) includes:

a storage unit (5c) which is configured to be able to store information regarding the yarn processor (1); and
a node information input unit (5a) which is configured to allow an input of the node information indicating presence of the node (K), and
the information management unit (110) executes: a node information storage process of storing the node information which is input through the node information input unit (5a) in the storage unit (5c); and
a node information acquisition process of allowing the node information acquisition unit (5) to acquire the node information stored in the storage unit (5c).

**20.** The yarn processing facility (100) according to claim 19, wherein,

the yarn processor (1) has, for each of the processing spindles (9), an unwound package sensor (24) which is configured to detect from which one of the yarn supply packages (Ps) attached to the yarn supply package retaining portion (20) the yarn (Y) is being unwound, and
when the unwound package sensor (24) detects that the yarn supply package (Ps) from which the yarn (Y) is unwound is switched, the information management unit (110) executes a node information changing process of changing the node information stored in the storage unit (5c) from the node information indicating presence of the node (K) to the node information indicating absence of the node (K).

**21.** The yarn processing facility (100) according to any one of claims 1 to 18, wherein,

the information management unit (110) includes:

a storage unit (5c) which is configured to be able to store information regarding the yarn processor (1); and
a node sensor (53) which is configured to detect the node (K), and
the yarn processing facility (100) executes a node information storage process of storing the node information indicating presence of the node (K) in the storage unit (5c), when the node sensor (53) detects the node (K);
a node information changing process of changing the node information stored in the storage unit (5c) from the node information indicating presence of the node (K) to the node information indicating absence of the node (K), when the node sensor (53) no longer detects the node (K); and
a node information acquisition process of allowing the node information acquisition unit (5) to acquire the node information stored in the storage unit (5c).

FIG.1

100

YARN PROCESSING FACILITY

1

110

FALSE-TWIST TEXTURING MACHINE

MANAGEMENT DEVICE

MACHINE CONTROLLER — 5

101a — MANAGEMENT INPUT UNIT

MACHINE INPUT UNIT — 5a

101b — MANAGEMENT OUTPUT UNIT

MACHINE OUTPUT UNIT — 5b

DISPLAY UNIT — 5b1

SOUND OUTPUT UNIT — 5b2

101c — MANAGEMENT STORAGE UNIT

MACHINE STORAGE UNIT — 5c

101

MACHINE CONTROLLER — 5

1 — MACHINE CONTROLLER — 5

MACHINE CONTROLLER — 5

INFORMATION MANAGEMENT UNIT

FIG.2

FIG.3

BASE LONGITUDINAL
DIRECTION

FIG.4(a) RELATIONSHIP BETWEEN REMAINING AMOUNT OF YARN IN YARN SUPPLY PACKAGE
ATTACHED TO FIRST ATTACHMENT UNIT AND TIME

FIG.4(b) RELATIONSHIP BETWEEN REMAINING AMOUNT OF YARN IN YARN SUPPLY PACKAGE
ATTACHED TO SECOND ATTACHMENT UNIT AND TIME

FIG.4(c) RELATIONSHIP BETWEEN WOUND AMOUNT OF YARN ON WINDING BOBBIN AND TIME

EP 4 345 553 A1

## FIG.5

(a)

| SPINDLE NUMBER | REMAINING AMOUNT[%] | REMAINING TIME |
|:---:|:---:|:---:|
| 7 | 10.3 | 0:02:00 |
| 12 | 19.5 | 0:03:42 |
| 9 | 36.6 | 0:07:06 |
| 8 | 58.8 | 0:11:24 |
| ⋮ | ⋮ | ⋮ |

LIST · EACH-SPINDLE — T2 · S1(S1a) · T1 · B1 — ASCENDING ORDER · 5b1

(b)

T1 — LIST · EACH-SPINDLE — T2 · S1(S1b) · 5b1
T3 — REMAINING AMOUNT · REMAINING TIME — T4 · S1b1

| 1 | 0:22:03 | 4 | 0:25:13 | 7 | 0:02:00 | 10 | 0:42:14 |
| 2 | 0:37:32 | 5 | 0:43:22 | 8 | 0:11:24 | 11 | 0:15:23 |
| 3 | 0:36:20 | 6 | 0:40:55 | 9 | 0:07:06 | 12 | 0:03:42 |

(c)

T1 — LIST · EACH-SPINDLE — T2 · S1(S1b) · 5b1
T3 — REMAINING AMOUNT · REMAINING TIME — T4 · S1b2

| 1 | 113.4 | 4 | 118.1 | 7 | 10.3 | 10 | 198.0 |
| 2 | 174.8 | 5 | 198.7 | 8 | 58.8 | 11 | 81.3 |
| 3 | 171.0 | 6 | 191.5 | 9 | 36.6 | 12 | 19.5 |

## FIG.6

START

S101 — INDIVIDUAL REMAINING AMOUNT (REMAINING TIME) INFORMATION ACQUISITION PROCESS

S102 — IS LIST TAB SELECTED? — NO → (1)

YES

S103 — ASCENDING ORDER SORTING INSTRUCTION? — NO

YES

S104 — ASCENDING ORDER FLAG = 1

S105 — IS THERE INFORMATION IN WHICH INDIVIDUAL REMAINING AMOUNT IS EQUAL TO OR SMALLER THAN PREDETERMINED AMOUNT? — NO → S109 — ASCENDING ORDER FLAG = 1? — NO

YES

S106 — ASCENDING ORDER FLAG = 1? — NO

YES

S109 YES → S110 — OUTPUT IN ASCENDING ORDER.

S111 — OUTPUT IN DESCENDING ORDER.

S107 — HIGHLIGHT AND OUTPUT IN ASCENDING ORDER.

S108 — HIGHLIGHT AND OUTPUT IN DESCENDING ORDER.

S112 — RESET ASCENDING ORDER FLAG.

(2)

END

# FIG.7

```
                              ( 1 )
                                │
                                ▼
S113              ╱────────────────────────╲
              ╱        IS THERE              ╲        NO
         ╱   INFORMATION IN WHICH INDIVIDUAL    ╲──────────────┐
         ╲   REMAINING AMOUNT IS EQUAL TO OR     ╱             │
              ╲  SMALLER THAN PREDETERMINED   ╱                │
                  ╲      AMOUNT?          ╱                     ▼
                      ╲──────────╱                  S117  ╱──────────╲
                          │                              ╱    IS       ╲     NO
                         YES                          ╱ REMAINING AMOUNT TAB ╲───────────┐
                          │                           ╲    SELECTED?     ╱               │
                          │                              ╲──────────╱                    │
                          │                       S118      │                  S119      │
                          │                               YES                            │
                          │                                 ▼                            ▼
                          │              ┌──────────────────────────────┐  ┌──────────────────────────────┐
                          │              │ ARRANGE, AND DISPLAY REMAINING │  │ ARRANGE, AND DISPLAY REMAINING TIME. │
                          │              │ AMOUNT.                        │  │ OUTPUT REMAINING TIME IN FORM OF │
                          │              │ OUTPUT REMAINING AMOUNT IN FORM OF│ │ SOUND IN ORDER OF SPINDLES.    │
                          │              │ SOUND IN ORDER OF SPINDLES.    │  └──────────────────────────────┘
                          │              └──────────────────────────────┘                │
                          ▼                           │                                  │
S114              ╱──────────────╲                    │                                  │
              ╱        IS          ╲      NO          │                                  │
         ╱  REMAINING AMOUNT TAB     ╲────────────┐   │                                  │
         ╲       SELECTED?         ╱              │   │                                  │
              ╲──────────────╱                   │   │                                  │
S115              │                         S116  │   │                                  │
                 YES                              │   │                                  │
                  ▼                               ▼   │                                  │
┌──────────────────────────────┐  ┌──────────────────────────────┐                      │
│ HIGHLIGHT, ARRANGE, AND DISPLAY │ │ ARRANGE, AND DISPLAY REMAINING TIME IN │             │
│ REMAINING AMOUNT.              │  │ HIGHLIGHTED MANNER.            │                      │
│ HIGHLIGHT AND OUTPUT REMAINING AMOUNT│ │ OUTPUT REMAINING TIME IN HIGHLIGHTED │         │
│ IN FORM OF SOUND IN ORDER OF SPINDLES.│ │ MANNER, IN FORM OF SOUND, AND IN ORDER │      │
└──────────────────────────────┘  │ OF SPINDLES.                  │                      │
                  │                └──────────────────────────────┘                      │
                  │                               │                                      │
                  ▼◄──────────────────────────────┴──────────────────────────────────────┘
                ( 2 )
```

# FIG.8

```
┌─────────────────────────────────┐
│   INDIVIDUAL REMAINING AMOUNT    │
│ INFORMATION ACQUISITION PROCESS  │
└─────────────────────────────────┘
                │
                ▼
S201
┌─────────────────────────────────┐
│ ACQUIRE REMAINING AMOUNT IN      │
│ UNWINDING-IN-PROGRESS PACKAGE.   │
└─────────────────────────────────┘
                │
                ▼
S202
          ◇ IS THERE NODE? ◇ ──── YES ──────────┐
                │                                 │
               NO                                 │
                │                                 │
S204            ▼                  S203           ▼
┌──────────────────────────────┐  ┌──────────────────────────────────────┐
│ INDIVIDUAL REMAINING AMOUNT =│  │ INDIVIDUAL REMAINING AMOUNT =        │
│ REMAINING AMOUNT IN          │  │ REMAINING AMOUNTS IN UNWINDING-      │
│ UNWINDING-IN-PROGRESS PACKAGE│  │ IN-PROGRESS PACKAGE AND RESERVE      │
│                              │  │ PACKAGE                              │
└──────────────────────────────┘  └──────────────────────────────────────┘
                │                                 │
                ▼◄────────────────────────────────┘
          ┌──────────┐
          │   END    │
          └──────────┘
```

FIG.9

BASE LONGITUDINAL
DIRECTION

FIG.10

| SPINDLE NUMBER | REMAINING AMOUNT[%] | REMAINING TIME |
|---|---|---|
| 7 | 10.3 | 0:02:00 |
| 12 | 19.5 | 0:03:42 |

S1

5b1

Europäisches Patentamt

European Patent Office

Office européen des brevets

# EUROPEAN SEARCH REPORT

**Application Number**

EP 23 17 8866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 246 254 A1 (TMT MACHINERY INC [JP]) 20 September 2023 (2023-09-20) <br> * paragraph [0005] * <br> * paragraph [0011] * <br> * paragraph [0015] * <br> * paragraph [0017] * <br> * paragraph [0037] * <br> * paragraph [0072] * <br> * paragraph [0085] * <br> ----- | 1,2,7, 19,20 | INV. <br> G05B19/409 <br> B65H67/02 |
| Y | US 2015/021425 A1 (YAMAGUCHI YUJI [JP] ET AL) 22 January 2015 (2015-01-22) <br> * paragraph [0028] * <br> * paragraph [0031] * <br> ----- | 1-9, 19-21 | |
| Y | US 2001/037545 A1 (STUTTEM MANFRED [DE]) 8 November 2001 (2001-11-08) <br> * paragraph [0003] * <br> * paragraph [0008] * <br> ----- | 1-21 | |
| Y | EP 3 438 334 B1 (MURATA MACHINERY LTD [JP]) 6 April 2022 (2022-04-06) <br> * paragraph [0013] * <br> * paragraph [0015] * <br> * paragraph [0047] * <br> * paragraph [0049] * <br> ----- | 10-21 | **TECHNICAL FIELDS SEARCHED (IPC)** <br><br> G05B <br> B65H |

The present search report has been drawn up for all claims

| Place of search | Date of completion of the search | Examiner |
|---|---|---|
| The Hague | 22 February 2024 | Lefeure, Guillaume |

EPO FORM 1503 03.82 (P04C01)

## ANNEX TO THE EUROPEAN SEARCH REPORT
## ON EUROPEAN PATENT APPLICATION NO.

EP 23 17 8866

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2024

| Patent document cited in search report | | | Publication date | Patent family member(s) | | | Publication date |
|---|---|---|---|---|---|---|---|
| EP | 4246254 | A1 | 20-09-2023 | CN | 116767964 | A | 19-09-2023 |
| | | | | EP | 4246254 | A1 | 20-09-2023 |
| | | | | JP | 2023138043 | A | 29-09-2023 |
| | | | | TW | 202337809 | A | 01-10-2023 |
| US | 2015021425 | A1 | 22-01-2015 | CN | 104291150 | A | 21-01-2015 |
| | | | | EP | 2826741 | A1 | 21-01-2015 |
| | | | | JP | 6404018 | B2 | 10-10-2018 |
| | | | | JP | 2015037868 | A | 26-02-2015 |
| | | | | US | 2015021425 | A1 | 22-01-2015 |
| US | 2001037545 | A1 | 08-11-2001 | CN | 1328524 | A | 26-12-2001 |
| | | | | EP | 1144295 | A2 | 17-10-2001 |
| | | | | JP | 4651817 | B2 | 16-03-2011 |
| | | | | JP | 2003526584 | A | 09-09-2003 |
| | | | | KR | 20010080062 | A | 22-08-2001 |
| | | | | TR | 200100962 | T2 | 23-09-2002 |
| | | | | TW | 440616 | B | 16-06-2001 |
| | | | | US | 2001037545 | A1 | 08-11-2001 |
| | | | | WO | 0021866 | A2 | 20-04-2000 |
| EP | 3438334 | B1 | 06-04-2022 | CN | 109385702 | A | 26-02-2019 |
| | | | | EP | 3438334 | A1 | 06-02-2019 |
| | | | | JP | 2019026981 | A | 21-02-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003526584 W
- JP 5873105 B
- JP H6212521 A
- JP 2002088605 A